# EUROPEAN PATENT SPECIFICATION

(11) **EP 0 396 113 B1**
(45) Date of publication and mention of the grant of the patent: **09.10.1996**
(21) Application number: 90108311.3
(22) Date of filing: 02.05.1990
(51) Int. Cl.: C08L 69/00, C08L 51/00, C08L 67/02, C08L 25/12, C08L 55/02

(54) **Grafted olefin copolymers and polycarbonate blends modified with a grafted olefin copolymer**
Gepfropfte Olefincopolymere und mit gepfropften Olefincopolymeren modifizierte Polycarbonatmischungen
Copolymères d'oléfines greffés et compositions de polycarbonate modifiées par des copolymères d'oléfines greffés

(30) Priority: 04.05.1989 US 347838; 04.05.1989 US 347847; 04.05.1989 US 347846
(43) Date of publication of application: 07.11.1990
(73) Proprietor: THE DOW CHEMICAL COMPANY, Midland, Michigan 48640 (US)
(72) Inventor: Laughner, Michael K., Lake Jackson, Texas 77566 (US); Lancaster, Gerald, Freeport Texas 77541 (US); Sun, Yun C., Midland, Michigan 48640 (US)
(74) Representative: Casalonga, Axel

(56) References cited:
- EP-A- 0 034 252
- EP-A- 0 142 802
- US-A- 4 536 545
- US-A- 4 762 890
- US-A- 4 880 908

## Description

This invention relates to compositions containing polycarbonate blended with other polymers, and relates particularly to polycarbonate compositions having both improved solvent resistance and improved impact strength.

Polycarbonate has found many uses because, in general, it combines a high level of heat resistance and dimensional stability with good insulating and noncorrosive properties, and it is easily molded. It does, however, suffer from a tendency to craze and crack under the effects of environmental stress, especially contact with organic solvents such as gasoline. Polycarbonate which has crazed is, undesirably, more likely to experience brittle rather than ductile failure. This disadvantage has been somewhat relieved by the practice of blending polycarbonate with various substances such as the olefin polymers polyethylene, polypropylene or polyisobutylene, as described for example in Goldblum, U.S. Patent No. 3,431,224. These added substances are capable of improving the resistance of polycarbonate to solvents, but they tend to cause an offsetting reduction in the toughness, impact resistance and weldline strength of the blended composition. Additionally, it is frequently found that when polycarbonate is modified with substances such as polyolefins, the added substances tend to separate in the blend from the polycarbonate and delaminate as evidenced by peeling or splintering. It would accordingly be desirable if substances admixed with polycarbonate for the purpose of improving the environmental stress (e.g. solvent) failure resistance ("ESFR") thereof did not also deleteriously affect its toughness and impact and weldline strength, and cause delamination as evidenced by peeling or splintering.

This invention involves a polycarbonate blend composition comprising, in admixture, (a) an aromatic polycarbonate and (b) a grafted olefin/carbon monoxide copolymer. This invention also involves a composition comprising in admixture, (a) an aromatic polycarbonate, (b) a grafted olefin/carbon monoxide copolymer and (c) a styrenic thermoplastic resin, an aromatic polyester or a mixture thereof.

In another preferred aspect, this invention involves a composition comprising (a) an aromatic polycarbonate, (b) a grafted olefin/carbon monoxide copolymer and optionally (c) a styrenic thermoplastic resin, an aromatic polyester or a mixture thereof. Articles molded from said composition have a measurable increase in one or more of the following properties as compared to the polycarbonate composition not containing a grafted olefin/carbon monoxide copolymer: (i) the tensile strength at break of articles under environmental stress failure resistance ("ESFR") testing conditions, (ii) the percent elongation at break under ESFR testing conditions, (iii) the weldline Izod value of articles molded from said composition, and (iv) the highest energy level at which articles molded from said composition show no crack when subjected to impact by a falling dart on a Gardner drop dart instrument.

In another preferred aspect, this invention also involves an improved method of reducing the tendency toward delamination of an article molded from a polycarbonate composition, optionally containing an aromatic polyester or a styrenic thermoplastic resin, wherein said composition is admixed with a grafted olefin/carbon monoxide copolymer, and said article is then molded from said composition. A further, preferable embodiment of the present invention involves an improved method of molding an article from a polycarbonate composition, optionally containing an aromatic polyester or a styrenic thermoplastic resin, wherein said article is molded from such a composition which comprises a grafted olefin/carbon monoxide copolymer.

It has been found that a composition prepared by blending or admixing polycarbonate with a grafted olefin copolymer component (optionally blended with an aromatic polyester or a styrenic thermoplastic resin) possesses improved combinations of ESFR, toughness, impact resistance and weldline strength which are improved over those of polycarbonate compositions not blended with grafted olefin copolymer.

The compositions of this invention are useful, for example, in the production of films, fibers, extruded sheets, multi-layer laminates and molded or shaped articles of virtually all varieties, especially appliance and instrument housings, automobile body panels and other components for use in the automotive and electronics industries.

The compositions of this invention are those in which polycarbonate has been admixed in a blended composition with a grafted olefin copolymer. Optionally other components can also be added, such as an aromatic polyester (such as polyethylene terephthalate - "PET") or a styrenic thermoplastic resin (such as a styrene/acrylonitrile copolymer- "SAN") or rubber-modified styrenic thermoplastic resin (such as acrylonitrile/butadiene/styrene copolymer- "ABS"), a toughening agent such as a butyl acrylate or methacrylate/butadiene/styrene rubber or a mixture of two or more of these. Suitable ranges of content for the compositions of this invention, by percent of weight of the total composition, are as follows: polycarbonate from 9 percent to 99 percent, preferably 9 to 94 percent, grafted olefin copolymer from 1 percent to 60 percent preferably 1 to 25 percent, aromatic polyester or styrenic thermoplastic resin (if used) up to 90 percent and preferably from 5 percent to 90 percent, and toughening agent up to 20 percent. Compositions prepared within the above ranges of content possess improved combinations of ESFR, toughness and impact and weldline strength, which are improved over those of polycarbonate compostions within the above ranges but not blended with the above mentioned grafted olefin/carbon monoxide copolymer component.

Preparation of the compositions of this invention can be accomplished by any suitable means known in the art. Typically the substances to be admixed with polycarbonate are dry blended in particulate form with sufficient agitation to obtain thorough distribution thereof within the polycarbonate. If desired, the dry-blended formulation can optionally be further melt mixed in an extruder, although mixing rolls, a dough-mixer or a Banbury mixer can also be used for such purpose. Alternatively, a master batch formulation can be prepared containing a minor proportion, e.g. 20 percent of the polycarbonate and the substances to be admixed or blended with it. The master batch is then available for storage or shipment in commerce, and can be diluted with additional polycarbonate at the time of use. The compositions of this invention can be formed or molded using conventional techniques such as compression, injection, calendering, vacuum forming, extrusion and/or blow molding techniques, alone or in combination. The compositions can also be formed into films, fibers, multi-layer laminates or extruded sheets on any machine suitable for such purpose.

The aromatic polycarbonates suitable for use in the present invention are produced by any of the conventional processes known in the art for the manufacture of polycarbonates. Generally, aromatic polycarbonates are prepared by reacting an aromatic dihydric phenol with a carbonate precursor, such as for example phosgene, a haloformate or a carbonate ester such as for example diphenyl carbonate.

A preferred method for preparing the aromatic polycarbonates suitable for use in the present invention involves the use of a carbonyl halide, such as phosgene, as the carbonate precursor. This method involves passing phosgene gas into a reaction mixture containing an activated dihydric phenol, or a nonactivated dihydric phenol and an acid acceptor, such as for example pyridine, dimethyl aniline, and quinoline. The acid acceptor may be used undiluted or diluted with inert organic solvents, such as methylene chloride, chlorobenzene or 1,2-dichloroethane. Tertiary amines are advantageous since they are good solvents as well as acid acceptors during the reaction.

The temperature at which the carbonyl halide reaction proceeds may vary from below 0°C to about 100°C. The reaction proceeds satisfactorily at temperatures from room temperature to 50°C. Since the reaction is exothermic, the rate of phosgene addition may be used to control the temperature of the reaction. The amount of phosgene required will generally depend upon the amount of dihydric phenol present. Generally speaking, one mole of phosgene will react with one mole of dihydric phenol to form the polycarbonate and two moles of HCl. The HCl is in turn taken up by the acid acceptor.

Another method for preparing the aromatic polycarbonates useful in the present invention comprises adding phosgene to an alkaline aqueous suspension of dihydric phenols. This is preferably done in the presence of inert solvents such as methylene chloride and 1,2-dichloroethane. Quaternary ammonium compounds may be employed to catalyze the reaction.

Yet another method for preparing such aromatic polycarbonates involves the phosgenation of an agitated suspension of an anhydrous alkali salt of an aryl diol in a nonaqueous medium such as benzene, chlorobenzene or toluene. The reaction is illustrated by the addition of phosgene to a slurry of the sodium salt of, for example, Bisphenol A in an inert polymer solvent such as chlorobenzene.

Generally speaking, a haloformate such as the bis-haloformate of Bisphenol A may be used in place of phosgene as the carbonate precursor in any of the methods described above.

When a carbonate ester such as diphenyl carbonate is used as the carbonate precursor in the polycarbonate-forming reaction, the materials are reacted at temperatures in excess of 100°C, for times varying from 1 to 15 hours. Under such conditions, ester interchange occurs between the carbonate ester and the dihydric phenol used. The ester interchange is advantageously consummated at reduced pressures on the order of from 10 to 100 millimeters of mercury (13,3 - 133 mbar), preferably in an inert atmosphere such as nitrogen or argon.

Although the polymer-forming reaction may be conducted in the absence of a catalyst, one may, if desired, employ a typical ester exchange catalyst, such as metallic lithium, potassium, calcium or magnesium. The amount of such catalyst, if used, is usually small, ranging, for example, from 0.001 percent to 0.1 percent, based on the weight of the dihydric phenols employed.

In the solution methods of preparation, the aromatic polycarbonate emerges from the reaction in either a true or pseudo solution depending on whether an aqueous base or pyridine is used as an acid acceptor. The copolymer may be precipitated from the solution by adding a polymer nonsolvent, such as heptane or isopropanol. Alternatively, the polymer solution may be heated, typically under reduced pressure, to evaporate the solvent.

The methods and reactants described above for preparing carbonate polymers suitable for use in the practice of this invention are discussed in greater detail in Moyer, U.S. Patent No. 2,970,131; Schnell, U.S. Patent No. 3,028,365; Campbell, U.S. Patent No. 4,384,108; Glass, U.S. Patent No. 4,529,791; and Grigo, U.S. Patent No. 4,677,162.

A preferred aromatic polycarbonate is characterized by repeated units corresponding to the general formula: 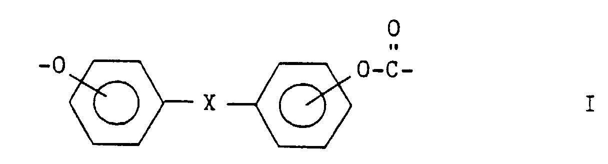 wherein X is a divalent C₁-C₁₅ hydrocarbon radical, a single bond, -O-, -S-, -S₂-, -SO-, -SO₂-, or -CO-. Each aromatic ring may additionally contain, other than hydrogen, 1-4 substituents such as C₁-C₄ alkyl hydrocarbon or alkoxy radicals, aryl or aryloxy radicals, or halo radicals.

Although the polycarbonates mentioned above, such as those derived from 2,2-bis(4-hydroxyphenyl)-propane ("Bisphenol-A" or "Bis-A") or from 1,1-bis(4-hydroxyphenyl )-1-phenyl ethane ("Bisphenol-A-P" or "Bis-A-P"), can each be employed in this invention as a homopolymer, the carbonate polymers used herein can also be derived from one or more bisphenols and one or more acid- or hydroxy-terminated reactants, such as dicarboxylic acids or alkylene glycols, or from two or more different dihydroxy compounds, or mixtures of any of the foregoing, in the event a carbonate copolymer or interpolymer rather than a homopolymer is desired. For example, a carbonate copolymer can be formed when Bis-A and Bis-A-P are reacted together with a carbonate precursor under the conditions described above. Copolymers can also be formed when a bisphenol is reacted with a carbonic acid derivative and a polydiorganosiloxane containing α,ω-bis-hydroxyaryloxy terminal groups to yield a siloxane/carbonate block copolymer as are discussed in greater detail in Paul, U.S. Patent No. 4,569,970, or when a bisphenol is reacted with a bis(ar-haloformylaryl) carbonate to yield an alternating copolyestercarbonate. The bis(ar-haloformylaryl) carbonate is formed by reacting a hydroxycarboxylic acid with a carbonic acid derivative under carbonate forming conditions, and the copolyestercarbonates are discussed in greater detail in Swart, U.S. Patent No. 4,105,633. The term "polycarbonate" as used herein, and in the claims appended hereto, should therefore be understood to include carbonate homopolymers, carbonate copolymers (as described above), and/or blends of carbonate homopolymers and/or carbonate copolymers.

An olefin copolymer which contains a carbonyl functionality on its backbone is advantageously utilized for preparation of the grafted olefin copolymer used in this invention, and the preferred such olefin copolymer is ethylene/carbon monoxide ("ECO"). ECO is formed from ethylene and carbon monoxide in a pressure vessel using a peroxy catalyst or a metallic or palladium compound as the catalyst. A hydrocarbon liquid which is non-reactive under the polymerization conditions is used as a diluent and reaction medium, and any such medium which acts as a solvent for the catalyst system and in which the catalyst is stable is typically suitable for use as the reaction medium. Air and water are preferably excluded from the reaction chamber. The polymerization can be performed at temperatures in the range from as low as 10°C up to 200°C, but is preferably run in the range of 50°C to 140°C. Pressures as high as 3,000 20 atmospheres (303 MPa) may be employed in the reaction, but the usual pressure of operation is in the range of atmospheres (2 MPa) to 1,500 atmospheres (152 MPa). Both yield and molecular weight increase with increasing pressure. Alternatively, an olefin/carbon monoxide copolymer can be made without solvent under high pressure conditions, using a free radical initiator in a stirred autoclave.

A variety of olefin monomers in place of ethylene, and numerous vinyl monomers in addition to ethylene, can be used to form the olefin copolymer backbone along with carbon monoxide. Any ethylenically unsaturated compound containing the >C=C< alkene bond which will undergo polymerization across the double bond can form part of the olefin/carbon monoxide ("olefin/CO") copolymer backbone, although olefin monomers such as propylene, isobutylene and 1-butene, and vinyl monomers such as butadiene, allyl esters, vinyl acetate, vinyl chloride, vinyl aromatics such as styrene, alkyl acrylates and methacrylates such as ethyl acrylate and methyl methacrylate, acrylonitrile, tetrafluoroethylene and other vinyl monomers and other substituted and un-substituted higher C₁-C₈ alpha alkenes or alpha mono-olefins, and mixtures of the foregoing, are preferred.

The portion of the olefin/CO copolymer derived from carbon monoxide is generally from 0.1 percent to 40 percent, and preferably from 0.5 percent to 30 percent by weight. A copolymer of carbon monoxide and an alpha-mono-olefin, and methods for preparation thereof, as described above, are discussed in greater detail in Lancaster, U.S. Patent No. 4,600,614; Brubaker, U.S. Patent No. 2,495,286; Loeb, U.S. Patent No. 3,083,184; Fenton, U.S. Patent No. 3,530,109 and Nozaki, U.S. Patent No. 3,694,412.

What is set forth above concerning methods of making ECO applies equally to other forms of said olefin/CO copolymer which result from variation in the backbone monomer mix. The backbone of the olefin/CO copolymer used in this invention can be made (in conjunction with carbon monoxide) from any of the various monomers, and can be made by any of the various methods, which are included above in the discussion relating specifically to the manufacture of ECO. However, the most preferred olefin/CO copolymer is ECO.

A grafted olefin/CO copolymer is prepared by polymerizing one or more vinyl or vinylidene monomers, especially those containing a polar or electronegative group or functionality, in the form of chains grafted onto a polymeric backbone consisting of an olefin copolymer having carbon monoxide ("CO") units in the backbone. Examples of such monomers are acrylates and methacrylates such as methyl acrylate and, methyl methacrylate, unsaturated acid anhydrides such as maleic anhydride, glycidyl methacrylate, vinyl acetate, a vinyl aromatic hydrocarbon such as styrene, and a vinyl cyanide such as acrylonitrile, or mixtures thereof. The manner by which this graft polymerization is accomplished is not critical to this invention and can be the result of any known method. Typically, but not necessarily, the monomer(s) of which the grafting chain is composed is/are brought into contact with the olefin/CO copolymer polymeric backbone, and the grafting polymer chains will form, and graft to the backbone, *in situ*. However, the grafting chain could be formed first as a polymer or (copolymer) in its own right and then grafted onto the polymeric backbone.

The graft polymerization can be initiated, for example, by free radical processes, by irradiation or by ionic means. The polymeric backbone and grafting monomer(s) can be brought together (1) in a solution or suspension where the polymeric backbone is dissolved in the monomer(s) or the polymeric backbone is swelled with the monomer(s) prior to the grafting; (2) in an emulsion where the polymeric backbone is dispersed in a latex polymerization of the monomer(s); or (3) in a bulk system where a partial polymerizate of the grafting polymer or (copolymer) is formed and then the partial polymerizate is mixed with a solution of the polymeric backbone in liquid monomer and the grafting is completed under high shearing conditions. The graft polymerization can be performed in a standard reaction vessel or in the barrel of an extruder.

A variety of conditions can prevail during the graft polymerization without affecting the performance of the end product thereof in the compositions of this invention. For example, the methods, conditions and various alternative monomers described below with respect to the formation of a grafted rubber component for use in a rubber-reinforced thermoplastic styrenic resin can be applied to the use of styrene, acrylonitrile, methyl methacrylate, vinyl acetate and/or said alternative monomers as the monomers to be grafted onto an olefin/CO copolymer.

Other monomers which can be grafted onto an olefin/CO copolymer polymeric backbone are vinyl compounds (especially when they bear a polar, electronegative group or functionality) such as vinyl toluene, α-methyl styrene, halogenated styrene, naphthalene, acrylonitrile, methacrylonitrile or alpha-halogenated acrylonitrile, or a C₁-C₈ alkyl acrylate such as methyl acrylate, ethyl acrylate, hydroxy ethyl acrylate or hexyl acrylate, a C₁-C₈ alkyl methacrylate such as methyl methacrylate or hexyl methacrylate, an acrylic or methacrylic acid; the vinylidene monomers, especially when they bear a polar, electronegative group or functionality such as a halogen group, or an organic group having a double or triple bond such as phenyl, carboxy, and cyano; and compounds such as vinyl chloride, vinylidene chloride or vinyl esters such as vinyl acetate or vinyl ethers; or mixtures of any two or more of the foregoing. In general, vinyl and vinylidene monomers from groups such as the vinyl and vinylidene - esters, -ethers, -organic acids, -epoxies, -aromatics, - alcohols, -halides, -nitriles and -amides, or mixtures thereof, can be used as the monomers to be grafted onto the olefin/CO copolymer.

The portion of the grafted olefin/CO copolymer derived from the grafting monomer(s) is from 1 percent to 50 percent, and preferably from 5 percent to 30 percent, by weight of the end product grafted copolymer. Systems and methods of graft polymerization useful in preparing the grafted olefin/CO copolymers suitable for use in this invention, as described above, are discussed in greater detail in Olener, U.S. Patent No. 4,536,545 and Strait, U.S. Patent No. 4,762,890.

The aromatic polyester used in this invention may be made by a variety of methods. Although the self-esterification of hydroxycarboxylic acids is known, direct esterification, which involves the reaction of a diol with a dicarboxylic acid with the resulting elimination of water, is a more frequently used method for commercial production, giving an -[-AABB-]-polyester. Although the presence of a catalyst such as p-toluene sulfonic acid, a titanium alkoxide or a dialkyltin oxide is helpful, the primary driving force behind the direct esterification reaction is heat. Temperatures applied exceed the melting points of the reactants and typically approach the boiling point of the diol being used, and usually range from 150°C to 280°C. An excess of the diol is typically used, and once all of the acid has reacted with diol, the excess diol is removed by distillation with the application of additional heat under reduced pressure. The ester of the diacid initially formed from the diol, having -OH end groups, undergoes alcoholysis and polymerization to form polymeric esters and the diol is split out as a byproduct and removed from the reaction zone. The reaction is typically carried out in the presence of an inert gas.

Alternatively, but in a like manner, ester-forming derivatives of a dicarboxylic acid can be heated with a diol to obtain polyesters in an ester interchange reaction. Suitable acid derivatives for such purpose are esters, halides, salts or anhydrides of the acid. When a bis ester of the diacid is used for purposes of the interchange reaction, the alcohol from which the ester is formed (the alcohol to be displaced) should be lower boiling than the diol to be used for formation of polyester (the displacing alcohol). The reaction can then be conveniently run at a temperature at or below the boiling point of the displacing alcohol but well above that of the displaced alcohol, and is usually run in a temperature range similar to that for direct esterification. The ester interchange reaction is typically run in the presence of a diluent, for example, an inert organic solvent such as chloroform or tetrachloroethane, and in the presence of a base, for example a tertiary organic base such as pyridine. Typical catalysts used when ester interchange involves alcoholysis are weak bases such as carbonates or alkoxides of sodium, lithium, zinc, calcium, magnesium or aluminum, whereas catalysts such as antimony oxide, titanium butoxide or sodium acetate are often used when acidolysis occurs in the interchange reaction. Diol derivatives such as an acetate can be used effectively when it is desired to conduct acidolysis.

Maintenance of high temperature is an important aspect of esterification, particularly toward the end of the reaction. As a consequence, thermal ester scission competes with polymer growth as the prevailing result of the process, which places an upper limit on the molecular weight which can be achieved through the use of melt polymerization. The molecular weight of polyester can be increased by adding a chain coupling agent, such as diphenyl carbonate, to the melt reaction mixture just prior its completion. Or, to achieve higher weight by solid state polymerization, polyester product of intermediate weight can be heated in a vacuum or stream of inert gas, first to a temperature where it crystallizes and then to a temperature close to its melting point.

Polyesters can also be produced by a ring-opening reaction of cyclic esters or lactones, for which organic tertiary bases and alkali and alkaline earth metals, hydrides and alkoxides can be used as initiators. Advantages offered by this type of reaction are that it can be run at lower temperatures, frequently under 100°C, and there is no need to remove a condensation product from the reaction.

Suitable reactants for making the polyester used in this invention, other than hydroxycarboxylic acids, are diols and dicarboxylic acids either or both of which can be aliphatic or aromatic. A polyester which is a poly(alkylene alkanedicarboxylate), a poly(alkylene phenylenedicarboxylate), a poly(phenylene alkanedicarboxylate), or a poly(phenylene phenylenedicarboxylate) is therefore appropriate for use herein. Alkyl portions of the polymer chain can be substituted with, for example, halogens, alkoxy groups or alkyl side chains and can contain divalent heteroatomic groups (such as -O-, -S- or -SO₂-) in the paraffinic segment of the chain. The chain can also contain unsaturation and non-aromatic rings. Aromatic rings can contain substituents such as halogens, alkoxy or alkyl groups, and can be joined to the polymer backbone in any ring position and directly to the alcohol or acid functionality or to intervening atoms.

Typical alkylene diols used in ester formation are the C₂-C₁₀ glycols, such as ethylene-, propylene-, and butylene glycol. Alkanedicarboxylic acids frequently used are oxalic acid, adipic acid and sebacic acid. Diols which contain rings can be, for example, a 1,4-cyclohexylenyl glycol or a 1,4-cyclohexanedimethylene glycol, resorcinol, hydroquinone, 4,4′-thiodiphenol, bis-(4-hydroxyphenyl)sulfone, a dihydroxynaphthalene, a xylylene diol, or can be one of the many bisphenols such as 2,2-bis-(4-hydroxyphenyl)propane. Aromatic diacids include, for example, terephthalic acid, isophthalic acid, naphthalenedicarboxylic acid, diphenyletherdicarboxylic acid, diphenyldicarboxylic acid, diphenylsulfonedicarboxylic acid, diphenoxyethanedicarboxylic acid.

In addition to polyesters formed from one diol and one diacid only, the term "polyester" as used herein includes random, patterned or block copolyesters, for example those formed from two or more different diols and/or two or more different diacids, and/or from other divalent heteroatomic groups. Mixtures of such copolyesters, mixtures of polyesters derived from one diol and diacid only, and mixtures of members from both of such groups, are also all suitable for use in this invention. For example, use of cyclohexanedimethylol together with ethylene glycol in esterification with terephthalic acid forms a clear, amorphous copolyester ("PETG") of particular interest. Also contemplated are liquid crystalline polyesters derived from mixtures of 4-hydroxybenzoic acid and 2-hydroxy-6-naphthoic acid; or mixtures of terephthalic acid, 4-hydroxybenzoic acid and ethylene glycol; or mixtures of terephthalic acid, 4-hydroxybenzoic acid and 4,4′-dihydroxybiphenyl.

Aromatic polyesters such as the poly(alkylene phenylenedicarboxylates) polyethylene terephthalate and polybutylene terephthalate, or mixtures thereof, are particularly useful in this invention.

Methods and materials useful for the production of polyesters, as described above, are discussed in greater detail in Whinfield, U.S. Patent No. 2,465,319; Pengilly, U.S. Patent No. 3,047,539 and Russell, U.S. Patent No. 3,756,986.

To enhance or facilitate the flow and ease of molding of the polycarbonate, and the other substances blended with polycarbonate in the compositions of this invention, a styrenic thermoplastic resin such as poly(styrene-acrylonitrile), often referred to as "SAN", can desirably be used. SAN and other styrenic thermoplastic resins are typically manufactured by either the emulsion, suspension or continuous bulk process.

When a styrenic thermoplastic resin such as SAN is made in emulsion, a reaction mixture of water, monomer, an emulsifying agent and a suitable polymerization catalyst are charged to the reaction vessel, for example a stirred autoclave. Acrylic, methacrylic, fumaric and maleic acids and their esters, nitriles and anhydrides are all monomers which can be used in combination with styrene to form the styrenic thermoplastic resins such as SAN, styrene/maleic anhydride copolymer ("SMA"), styrene/methyl methacrylate copolymer ("SMMA") or SAN/methyl methacrylate copolymer ("SANMMA"). More than one reactor can be used in series if it is desired to add monomer, or to raise the level of conversion, incrementally. The formation of polymer is exothermic. A portion of the heat generated is used to drive the reaction, and the balance is dissipated by cooling jackets or by evaporation under reduced pressure. The reaction can be run in the range of 100°F (38°C) to 200°F (94°C), usually between 175°F (80°C) and 200°F (94°C). A variety of emulsifying agents can be used. Frequently, soaps such as those based on the salt of a fatty acid or an alkyl aromatic sulfonic acid; a rosin acid soap; or non-ionic emulsifying agents are used. Catalysts may be of the peroxide type, the azo type or the redox type.

The monomers which can be copolymerized with the styrenic monomer to form SAN, or other styrenic thermoplastic resins, include the vinylidene monomers, especially when they bear a polar, electronegative group such as a halogen group, or an organic group having a double or triple bond such as carboxy, cyano or the like. Representative styrenic monomers include styrene and substituted derivatives thereof; and representative comonomers include acrylic acid based compounds such as acrylonitrile and methacrylonitrile; esters such as the acrylates or methacrylates; maleimides; and vinyl compounds such as vinyl chloride, vinyl acetate or vinylidene chloride; or mixtures of any two or more of the foregoing. In general, vinyl and vinylidene comonomers from groups such as the vinyl and vinylidene -esters, -ethers, -organic acids,-alcohols, -halides, -nitriles and -amides, or mixtures thereof, can be used to form the styrenic thermoplastic resins. When the preferred monomers of styrene and acrylonitrile are used to form SAN, they are frequently employed in ratios of about 90 to about 55 parts by weight of styrene and about 10 to about 45 parts by weight of acrylonitrile. The polymeric product is usually recovered by conventional coagulation. The styrenic thermoplastic resin, and methods for making same, described above are discussed in greater detail in Murray, U.S. Patent No. 3,547,857 and Kohlpoth, U.S. Patent No. 3,772,257.

Alternatively, a styrenic thermoplastic resin such as SAN can be prepared by the suspension process. An aqueous mixture of monomers, initiator and suspending agent is reacted in a pressure vessel at a temperature between 100°C and 200°C, and between 6.9 and 690 kPa, after which the residual monomers are removed by steam stripping. The product in slurry form can be dewatered in a centrifuge or by filtration and is then dried. Suspending agents which can be used are materials such as polyvinyl pyrrolidone, carboxymethyl cellulose, lecithin or calcium phosphate. The suspension process and the other processes described herein are amenable to copolymerization of the styrenic monomer with mononitriles having α,β-olefinic unsaturation and lower alkyl or halogen substituents together with mono-vinyl monomers. These include esters and nitriles of olefinically unsaturated carboxylic acids, vinyl esters, vinyl ethers and α-olefins, or mixtures thereof. Examples of preferred styrenic monomers of this category are the styrenes, the vinyl toluenes, the vinyl xylenes, and examples of preferred comonomers of this category are acrylonitrile and methacrylonitrile, the acrylates and the methacrylates or maleates and fumarates, or mixtures thereof. The suspension process for making a styrenic thermoplastic resin, such as SAN, described above is discussed in greater detail in Aliberti, U.S. Patent No. 3,444,270.

A styrenic thermoplastic resin, such as SAN, can be prepared by the bulk or mass process wherein polymerization occurs because of the direct contact between the monomers in the presence of heat, but without need for any sort of suspending or emulsifying agent. However, because of the viscosity developed by the polymer product, a solvent such as benzene, ethylbenzene, toluene or xylene is frequently added to the reaction mixture to facilitate machine processing. The process can be run in either a continuous tube or a stirred vessel. Reflux condensation can be used to control temperature and pressure in the reaction zone or vessel. If a solvent is used, it is removed during devolatilization by subjecting the product to high temperature, usually in excess of 200°C, and reduced pressure. As is true of the emulsion and suspension processes, the bulk process can be used to polymerize monoalkenyl aromatic compounds and alkenyl nitrile compounds. Preparation of a styrenic thermoplastic resin (such as SAN) by the bulk mass process, as described above, is discussed in greater detail in Hanson, U.S. Patent No. 2,989,517 and Latinen, U.S. Patent No. 3,813,369.

The styrenic thermoplastic resin used in this invention can be made from any of the various monomers (or mixtures thereof), and can be made by any of the various methods, which are included above in the discussion. Other examples of a styrenic thermoplastic resin include, among others, SMA, SMMA and SANMMA. However, the most preferred styrenic thermoplastic resin is SAN. A typical SAN is Tyril® 880 styrene-acrylonitrile resin, available from The Dow Chemical Company, for use as both a styrenic thermoplastic resin and as a polymeric chain to be grafted onto an olefin copolymer, as hereinafter set forth.

Equally effective for the purpose of enhancing or facilitating the processing of the blended polycarbonate compositions of this invention are styrenic thermoplastic resins which are rubber-modified. An example of a rubber-modified styrenic thermoplastic resin which can be advantageously used in this invention is an elastomeric-thermoplastic composite such as an acrylonitrile-butadiene-styrene copolymer ("ABS"). The elastomeric portion of such composite is usually dispersed as discrete particles in a matrix made up of the thermoplastic portion. The various particles are usually grafted with an amount of polymer which is identical in composition to or compatible with the thermoplastic matrix, which allows the rubber properties of the elastomeric portion, or component, to contribute to the toughness of the composite. Grafting between the elastomeric component and the thermoplastic matrix allows the shear-yielding tendency of the rubber/elastomeric phase to assist in the dissipation of the energy of an impact blow, reducing the likelihood of a stress fracture.

ABS, for example, is typically formed by the grafting of an SAN copolymer onto a polybutadiene substrate latex. The polybutadiene rubber is dispersed as a discrete phase in a thermoplastic component formed by the SAN. The rubber content of the rubber-modified styrenic thermoplastic resin used in this invention is not more than 40 percent by weight. This structural aspect of ABS, the dispersion of a rubber in a compatible thermoplastic phase, together with the flexibility of varying the molecular weight of the respective components, the degree of grafting, and rubber particle size and morphology, is usually more important than the precise monomer content. The composite can be manufactured from nothing other than acrylonitrile, butadiene and styrene, or other monomers can be substituted or mixed in with them. Although alteration of the monomer mix yields a variation in the properties of the composite, usually it does not, nor is intended to, cause a variation in the fundamental substrate-graft-matrix structure which is characteristic of a rubber-modified styrenic thermoplastic resin such as ABS. Some of the monomers which are frequently substituted for or intermixed with acrylonitrile, butadiene and styrene are mentioned below in connection with the usual methods of manufacturing ABS. What is set forth below concerning methods of making the elastomeric/thermoplastic composite used as a rubber-modified styrenic thermoplastic resin in this invention from acrylonitrile, butadiene and styrene applies equally to the other forms of said elastomeric/thermoplastic composite which result from variation in the monomer mix.

One method for making a rubber modified styrenic resin such as ABS resin is emulsion polymerization. The first step in this process is the production of a rubber substrate latex in an aqueous emulsion. The substrate results from polymerization, which can be initiated by organic peroxides, persulfates, iron, sugar, or peroxide redox systems, of 1,3-butadiene alone or in combination with other monomers. Butadiene can be copolymerized with either styrene or acrylonitrile to form the substrate, but numerous other comonomers yield equivalent results. In general, any mixture containing a conjugated diene and a copolymerizable compound containing a single olefinic double bond, in proportions such that an unsaturated elastomeric copolymer is formed on polymerization of the mixture in aqueous emulsion, is appropriate. For example, there may be used mixtures containing a predominant amount of butadiene-1,3, isoprene, 2,3-dimethyl butadiene-1,3 or piperylene, or a combination of two or more of these and a lesser amount of one or more of the following monomers: styrene, alpha-methyl styrene, p-methoxy styrene, p-chloro styrene, dichloro styrene, vinyl naphthalene and other alkenyl substituted aromatic compounds of the formula 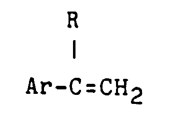 wherein Ar is an aromatic radical having its connecting valence on a ring carbon atom with R being hydrogen or alkyl, acrylonitrile, methacrylonitrile, ethacrylonitrile, α-chloro acrylonitrile, methyl methacrylate, ethyl methacrylate, isobutyl methacrylate, methyl acrylate, propyl acrylate, butyl acrylate, octyl acrylate, methyl α-chloro acrylate, methacrylamide, acrylamide, N,N-diethyl acrylamide and other nitriles, amides and alkyl esters of α-methylene aliphatic monocarboxylic acids, substituted aromatic maleimides such as N-phenyl maleimide; diethyl fumarate, diethylchloromaleate, vinylidene chloride, methyl vinyl ketone, methyl isopropenyl ketone, vinyl pyridines, vinyl furan, vinyl carbazole, isobutylene and ethylene. It is preferred that, in the preparation of the rubber latex, the proportion of butadiene to other monomers be in the range of 2/1 to 15/1. The particle size of the rubber latex substrate, which typically falls in the 0.05 to 0.8 micrometer (µm) range, affects the efficiency with which the SAN copolymer produced in the second step of the procedure grafts to the rubber latex substrate.

After formation of the rubber latex substrate, the rubber latex substrate and, in the case of ABS, styrene and acrylonitrile monomers are subjected to further aqueous emulsion. The concentration of styrene is usually about 1.5 to 3.5 times that of acrylonitrile. However other monomers such as methacrylonitrile, divinylbenzene, α-methyl styrene, p-methyl styrene, methyl methacrylate, N-phenyl maleimide, chlorinated and brominated styrenes, and methyl-, ethyl- or n-butylacrylate, or mixtures thereof, may also be in conjunction with styrene and acrylonitrile. Organic peroxides, azo compounds, persulfates, or redox systems are usually used to initiate polymerization. During this polymerization SAN or other copolymer is formed, some of which is grafted to the rubber latex substrate, and some of which is free. The latex containing both the grafted rubber and the free or ungrafted polymer (e.g. SAN) is then mixed with a coagulant solution, heated and agitated to produce discrete particles. The slurry containing those particles is dewatered in, a centrifuge, and the resin is dried to produce the desired ABS resin or, in the case where the rubber concentration is greater than 40 weight percent, a precursor concentrate that can be mixed with additional amounts of SAN or other resin to form the ABS or other rubber modified styrenic thermoplastic resin. Methods for making ABS resin by emulsion polymerization, as described above, are discussed in greater detail in Childers, U.S. Patent No. 2,820,773 and Calvert, U.S. Patent No. 3,238,275.

When ABS or other rubber modified styrenic thermoplastic resin is made by suspension or mass-suspension polymerization, a pre-formed elastomeric component, usually a polybutadiene or a butadiene/styrene copolymer, is dissolved in a mixture of the monomers, such as styrene and acrylonitrile. The rubber component may be one of the several mentioned above with respect to emulsion polymerization of ABS, or may be polyisoprene, polycyclopentadiene, natural rubber, chlorinated rubber or copolymers of butadiene with isobutylene. However, the preferred rubber component is a linear 1,3 polybutadiene having about a 35 percent to 50 percent cis content. This polybutadiene is frequently prepared using a lithium metal, lithium alkyl or Ziegler type catalyst rather than by emulsion polymerization because of the tendency of the emulsion process to yield a non-linear product.

Although the rubber component is usually dissolved in the styrene-acrylonitrile mixture, it may be dissolved just in styrene and then introduced into the monomer mix. The preferred ratio of styrene to acrylonitrile is about 90/10 to about 60/40, and in the preferred recipe the rubber component constitutes from about 4 percent to no more than about 40 percent of the product. As with the emulsion process described above, numerous substances will function in a manner equivalent to that of styrene and may be substituted therefor, to-wit: α-methyl styrene, or other substituted vinyl aromatics such as vinyl-toluene, vinylxylene, vinylethyl benzene or vinylchloro benzene. Methacrylonitrile is another alkenyl cyanide monomer which will serve in the place of acrylonitrile.

The rubber component, monomers and initiator are charged to the reaction vessel and polymerization ensues until a conversion rate of about 15 percent to about 30 percent is reached, resulting in the production of a prepolymer. Phase inversion occurs and the rubber becomes the discontinuous phase dispersed as particles ranging from 0.5 to 5 µm in size.

The prepolymer is then placed in a suspension reactor in an aqueous solution containing a suspending agent, initiator and chain transfer agent. Typical suspending agents are carboxymethyl cellulose, polyvinyl alcohol, methyl cellulose, sulfonated polystyrenes, polyglycol ethers and hydroxyethyl cellulose. Agitation of the solution helps complete polymerization, and the product is yielded in the form of beads which are preferably non-agglomerated and have minimal water occlusion. Typical initiators for the graft polymerization which occurs during suspension are t-butyl perbenzoate, di-t-butyl peroxide, dibenzoyl peroxide, t-butyl peracetate or t-butylperoxy isopropyl carbonate. The process is completed by dewatering the slurry in a centrifuge, and moisture content is further reduced by flash drying. Manufacture of ABS by the suspension process, as described above, is discussed in greater detail in Carrock, U.S. Patent No. 3,515,692 and Ackerman, U.S. Patent No. 4,151,128.

In bulk or mass polymerization, ABS is formed by dissolving an elastomeric component in the monomer mix which, for example contains styrene, acrylonitrile, an initiator and, frequently, a chain transfer agent such as a mercaptan or a terpinolene. The reaction can, however, be thermally initiated. The monomers polymerize, some polymer grafting to the rubber component, but most forming a monomer-polymer solution. As the relative volume of the monomer-polymer phase increases, discrete rubber particles become dispersed in the matrix resulting from the monomer-polymer phase. The rubber particles are stabilized by being grafted with polymer at the interface between the particles and the polymer matrix. Because polymerization occurs within a monomer/polymer medium, viscosity increases as conversion increases. To allow continued agitation of the reaction mixture despite such increasing viscosity, diluents such as methyl ethyl ketone and ethylbenzene can be added to the reactor. Upon the completion of polymerization, the melt is devolatilized using equipment such as a devolatilizing extruder or a flash evaporator, and vacuum is applied to remove unreacted monomers and diluents. Modifiers such as pigments or stabilizers can be added while the composite is still in the melt.

As is true of the emulsion or suspension methods, a number of possible styrenic monomers can be used and numerous substances can be copolymerized into the styrenic thermoplastic resin made in the bulk method. Examples of possible styrenic monomers, also referred to as monovinylidene aromatic monomers, include: α-alkyl monovinylidene monoaromatic compounds, e.g. α-methylstyrene, α-ethylstyrene, α-methylvinyltoluene; ring-substituted alkyl styrenes, e.g. vinyl toluene, o-ethylstyrene, p-ethylstyrene, 2,4-dimethylstyrene; ring-substituted halostyrenes, e.g., o-chlorostyrene, p-chlorostyrene, o-bromostyrene, 2,4-dichlorostyrene; ring-alkyl, ring-halo-substituted styrenes, e.g. 2-chloro-4-methylstyrene and 2,6-dichloro-4-methylstyrene. If so desired, mixtures of such monovinylidene aromatic monomers may be employed. Examples of possible comonomers include: nitriles such as acrylonitrile and methacryonitrile; methacrylates such as methyl methacrylate; maleic acid and its esters and anhydrides; substituted aromatic maleimides such as N-phenyl maleimide; and mixtures of the foregoing. Methacrylonitrile can also be used in combination with acrylonitrile. Bulk methods for the preparation of ABS, as described above, are discussed in greater detail in Kruse, U.S. Patent No. 4,187,260; Simon, U.S. Patent No. 4,252,911 and Weber, U.S. Patent No. 4,526,926.

What is set forth above concerning methods of making the rubber-modified styrenic thermoplastic resin used in this invention from styrene, acrylonitrile and butadiene applies equally to the other forms of said rubber-modified styrenic thermoplastic resin which result from variation in the type of rubber material that is used. For example, another form which the rubber-modified styrenic thermoplastic resin can take is an AES copolymer, which is obtained when SAN is grafted to a substrate made up of an EPDM (ethylene/propylene/non-conjugated-diene) rubber, as in the case of Rovel® weatherable polymers available from The Dow Chemical Company. See, for example, Henton, U.S. Patent No. 4,766,175. Or SAN can be crosslinked or grafted to an acrylate elastomer to form a rubber-modified styrenic thermoplastic resin, as in the case of an ASA copolymer, which is discussed in greater detail in Yu, U.S. Patent No. 3,944,631. Additionally, mixtures of the various copolymers described above can serve as the rubber-modified styrenic thermoplastic resin of this invention. However, the preferred rubber-modified styrenic thermoplastic resin is ABS.

The toughening agent optionally used in this invention can be made from any suitable rubber or elastomer. Although one skilled in the art would be able to select a substance containing an appropriate type and amount of rubber, a few representative types of rubber or elastomeric compounds suitable for use in this invention as a toughening agent are described below to illustrate the variation in the known substances which would suffice for such purpose. The rubber content of the toughening agent used in this invention is greater than 40 percent by weight, and a mixture of two or more of the rubbers mentioned below can be used as the toughening agent.

An acrylic elastomer is known for exceptionally good resistance to ozone, oxidation and the effects of hot oil as a result of its saturated backbone. It is made up primarily of acrylates, but also sometimes includes ethylene in the backbone for flexibility. Acrylic elastomers can be made by both the emulsion and suspension processes and are discussed in greater detail in Aloia, U.S. Patent No. 3,976,611.

Butyl rubber is almost free of unsaturation as it is the product of copolymerizing isobutylene and isoprene where the isoprene typically makes up no more than 2.5 mole percent of the copolymer. It therefore has essentially the same good resistance to oxidation and other degradative effects that acrylic elastomers do. Although the solution process is used to manufacture butyl rubber, most of it is made by a precipitation (slurry) method wherein the monomers are copolymerized in methyl chloride diluent using a catalyst such as aluminum chloride. Butyl rubbers, as described above, are discussed in greater detail in Green, U.S. Patent No. 2,401,754 and Nelson, U.S. Patent No. 2,462,123.

The chlorosulfonated polyethylene rubbers are prepared by bubbling a mixture of chlorine and sulfur dioxide into a solution containing polyethylene, and the rubber product typically contains 20 to 40 percent chlorine as secondary alkyl chlorides and 1 to 2 percent sulfur as secondary sulfonyl chlorides. Chlorosulfonated polyethylene rubbers, as described above, are discussed in greater detail in Beekly, U.S. Patent No. 2,640,048 and Kalil, U.S. Patent No. 2,923,979.

Although the presence of the pendant methyl group gives EPM (ethylene/propylene) rubber a structure similar to that of natural rubber, EPM rubber has no double bonds in the backbone. It therefore has the good resistance associated with saturation to the chain scission and cross linking caused by the degrading effects of light, heat, oxygen and ozone. The ratio of ethylene to propylene in EPM rubber is from about 50/50 to about 75/25. However, this lack of unsaturation in the backbone precludes vulcanization, and a diene is therefore frequently added to the copolymer to furnish a pendant group containing an addition polymerizable C=C bond. The diene, which can be straight chain or cyclic, should not be conjugated, and the two C=C bonds should have different activities with respect to polymerization. When a nonconjugated diene monomer is copolymerized with ethylene and propylene, the product is known as EPDM rubber. EPM/EPDM rubbers, which can be made by the solution process, are described above and are discussed in greater detail in Paige, U.S. Patent No. 3,341,503.

Fluorinated rubbers, such as the fluorocarbon elastomer poly(tetrafluoroethylene-co-propylene), are made in a high pressure, free radical aqueous emulsion, using organic or inorganic peroxy compounds as initiators. A fluorinated carboxylic acid soap is usually used as the emulsifying agent. Fluorinated elastomers and methods for making same, as described above, are discussed in greater detail in Rexford, U.S. Patent No. 3,051,677; Honn, U.S. Patent No. 3,053,818 and Pailthorp, U.S. Patent No. 2,968,649.

Formation of neoprene rubber by polymerization of 2-chloro-1,3-butadiene can result from addition involving both of the double bonds, or through just one of the two leaving the other as a pendant group. Addition is 95 percent through both bonds at -40°C and decreases to 70 percent at 100°C. Addition can be head-to-head, head-to-tail or tail-to-tail. Neoprene rubber is typically made by free radical batch emulsion polymerization, but can also be made in a continuous process. Neoprene rubber, as described above, is discussed in greater detail in Collins, U.S. Patent No. 1,967,865 and Aho, U.S. Patent No. 2,831,842.

Nitrile rubber, which is polymerized from 1,3-butadiene and acrylonitrile, typically has about 15 to 50 percent acrylonitrile content. The presence of the polar -CN group gives this rubber good resistance to non-polar hydrocarbon oils and solvents, but the residual C=C bond in the backbone exposes the molecule to the embrittlement caused by the cross-linking which results from oxidative degradation. It is usually preferred to make nitrile rubbers by emulsion, as an aqueous system is more easily operated than one, for example, requiring a solvent. Nitrile rubber and methods for making same, as described above, are discussed in greater detail in Konrad, U.S. Patent No. 1,973,000.

As with rubbers involving derivatives of butadiene, formation of polybutadiene can be by either 1,4 or 1,2 (vinyl) addition of the butadiene molecule. 1,4 products are either *cis* or *trans*, and vinyl products are classified as to tacticity. High *cis*-polybutadiene is a soft, easily solvated material with excellent resilience and dynamic properties, whereas high *trans*-polybutadiene is a hard, rigid material which is difficult to dissolve. Polybutadiene rubber is typically manufactured by solution polymerization, using organic lithium compounds or coordination catalysts containing metals in reduced valence states. Polybutadiene rubber, as described above, is discussed in greater detail in Brockway, U.S. Patent No. 2,977,349 and Ueda, U.S. Patent No. 3,170,907.

Polyisoprene, with its pendant methyl group on what would otherwise be a butadiene unit, also polymerizes in *cis*-1,4, *trans*-1,4 or 1,2 (vinyl) form. *Cis-*1,4 polyisoprene, the synthetic equivalent of natural rubber, is, expectedly, a soft elastic material, while the *trans* isomer is hard and crystalline and is used, for example, to make golf ball covers. Ziegler catalysts can be used in the polymerization, and, when the Ti/Al ratio therein is approximately 1, the product will be 98 to 99 percent *cis*, whereas when the Ti/Al ratio is increased to about 2, the product is all *trans*. Polyisoprene and methods for making same, as described above, are discussed in greater detail in Kahn, U.S. Patent No. 3,165,503.

Polyether rubbers include epichlorohydrin elastomers, which can be prepared either by a coordination polymerization mechanism using an aluminum alkyl-water catalyst in a hydrocarbon solvent, or in solution using benzene, toluene or methylene chloride as the solvent. Propylene oxide elastomers can also be prepared in solution, by copolymerization with allyl glycidyl ether, using a coordination catalyst such as diethyl zinc water. Polyether rubbers, as described above, are discussed in greater detail in Vandenberg, U.S. Patent No. 3,634,303 and Vandenberg, U.S. Patent No. 3,639,267.

Thermoplastic elastomers include, for example, styrene-diene ABA block copolymers, which have a rigid block "A" having a T*g* above room temperature and a rubbery block "B" having a T*g* below room temperature. Styrene-diene block copolymers, as described above, are discussed in greater detail in Holden, U.S. Patent No. 3,265,766 and Prudene, U.S. Patent No. 3,949,020. Other thermoplastic elastomers are those based on urethane, such as described in Schollenberger, U.S. Patent No. 3,015,650 and Saunders, U.S. Patent NO. 3,214,411; or those based on copolyester-ether, such as described in Witsiepe, U.S. Patent No. 3,651,014.

An SBR rubber is a copolymer of styrene and butadiene. The monomers themselves can be randomly dispersed along the backbone, or blocks of each monomer can be randomly dispersed. SBR rubbers, as described above, are discussed in greater detail in Zelinski, U.S. Patent No. 2,975,160 and Zelinski, U.S. Patent No. 3,281,383.

An MBS rubber contains a substrate latex, or core, which is made by polymerizing a conjugated diene, or by copolymerizing a conjugated diene with a mono-olefin or polar vinyl compound, such as styrene, acrylonitrile or methyl methacrylate. The substrate latex is typically made up of about 45 to 75 percent conjugated diene and about 25 to 55 percent of the mono-olefin or polar vinyl compound. A mixture of monomers is then graft polymerized to the substrate latex. A variety of monomers may be used for this grafting purpose, of which the following are exemplary: vinyl aromatic compounds such as styrene, vinyl toluene, alpha-methyl styrene, halogenated styrene, naphthalene; acrylonitriles including methacrylonitrile or alpha-halogenated acrylonitrile; or a C₁-C₈ alkyl acrylate such as methacrylate, ethylacrylate or hexyl acrylate; a C₁-C₈ alkyl methacrylate such as methyl methacrylate, ethyl methacrylate or hexyl methacrylate; an acrylic or methacrylic acid; or a mixture of two or more of the foregoing. The extent of grafting is sensitive to the substrate latex particle size, and particle size may be influenced by controlled coagulation techniques among other methods. When the graft level is allowed to reach an excessively high level, the rubbery effect of the relative substrate latex content is reduced.

The grafting monomers may be added to the reaction mixture simultaneously or in sequence, and, when added in sequence, layers, shells or wart-like appendages can be built up around the substrate latex, or core. The monomers can be added in various ratios to each other. A typical weight ratio for an MBS rubber is about 60 to 80 parts by weight substrate latex, about 10 to 20 parts by weight first grafting monomer and about 10 to 20 parts by weight second grafting monomer. A preferred formulation of an MBS rubber is one having a core built up from about 71 parts of butadiene, about 3 parts of styrene, about 4 parts of methyl methacrylate and about 1 part of divinyl benzene; a second inner shell phase of about 11 parts of styrene; and an outer shell phase of about 11 parts of methyl methacrylate and about 0.1 part of 1,3-butylene glycol dimethacrylate, where the parts are by weight of the total composition. A product having substantially such content is available commercially from Rohm and Haas Company as Paraloid™ EXL 3607 core-shell polymer. The MBS rubber and methods for making same, as described above, are discussed in greater detail in Saito, U.S. Patent No. 3,287,443; Curfman, U.S. Patent No. 3,657,391 and Fromuth, U.S. Patent No. 4,180,494.

A butyl acrylate rubber has a first phase forming an elastomeric core and a second phase forming a rigid thermoplastic graft or shell phase about said elastomeric core. The elastomeric core is formed by emulsion or suspension polymerization of monomers which consist of at least about 50 weight percent alkyl acrylates having up to fifteen carbon atoms, and, although longer chains may be used, the alkyls are preferably C₂-C₆. The elastomeric core phase should have a T_{*g*} of less than 25°C, and preferably less than 0°C.

The rigid thermoplastic phase of the butyl acrylate rubber is formed on the surface of the elastomeric core using suspension or emulsion polymerization techniques. The monomers necessary to create this phase together with necessary initiators are added directly to the reaction mixture in which the elastomeric core is formed, and polymerization proceeds until the supply of monomers is substantially exhausted. Monomers such as a C₁-C₈ alkyl acrylate, for example, methyl acrylate, ethyl acrylate, hydroxy ethyl acrylate or hexyl acrylate, or a C₁-C₈ alkyl methacrylate, for example methyl methacrylate or hexyl methacrylate can be used for this purpose. Either thermal or redox initiator systems can be used. By the use of graft linking agents on the surface of the elastomeric core, a portion of the chains which make up the rigid thermoplastic phase are chemically bonded or grafted to the elastomeric core. It is preferred that there be at least about 20 percent bonding of the rigid thermoplastic phase to the elastomeric core.

A preferred butyl acrylate rubber is made up of 40 to 95 percent by weight of an elastomeric core phase and 60 to 5 percent of a rigid thermoplastic phase. The elastomeric core can be polymerized from 75 to 99.8 percent by weight C₁ to C₆ acrylate, preferably n-butyl acrylate, with the balance being copolymerizable monomer, crosslinking monomer, graftlinking agent or a mixture of one or more of these. The rigid thermoplastic phase can be polymerized from at least 50 percent by weight of C₁ to C₈ alkyl methacrylate, preferably methyl methacrylate, with the balance being copolymerizable monomer, crosslinking monomer, graftlinking agent or a mixture of one or more of these. A butyl acrylate core/shell rubber product having substantially such content is available commercially from Rohm and Haas Company as Paraloid™ 3330 composite interpolymer. Butyl acrylate rubber and methods for making same, as described above, are discussed in greater detail in Owens, U.S. Patent No. 3,808,180 and Witman, U.S. Patent No. 4,299,928.

A variety of additives are available, and typically find use in compositions such as those of this invention, for protection against thermal, oxidative and ultra-violet degradation. Such additives may be included in the composition at any point during the processing, and the choice as to which additive is employed is not critical to this invention. Representative of the thermal and oxidative stabilizers which can advantageously be utilized are: hindered phenols, hindered amines, hydroquinones, phosphites, including substituted members of those groups and/or mixtures of more than one thereof. A preferred phenolic antioxidant is Irganox™ 1076 antioxidant, which is available from Ciba-Geigy Corp. and is discussed in greater detail in Dexter, U.s. Patent No. 3,285,855, and Dexter, U.S. Patent No. 3,330,859. Ultra-violet stabilizers such as various substituted resorcinols, salicylates, benzotriazoles, benzophines and hindered phenols can also be usefully included in the compositions of this invention, as can be lubricants, colorants, fillers such as talc, clay or mica, pigments, ignition resistant additives and mold release agents, and reinforcement agents such as fiberglass. Additives and stabilizers such as the foregoing, and many others which have not been mentioned, are known in the art, and the decision as to which, if any, to use is not critical to this invention. However, such additives, if used, will typically not exceed 5 percent by weight of the total composition, except in the case of fillers and reinforcing agents which may be used in amounts of up to 40 percent by weight.

### Experiments

To illustrate the practice of this invention a number of experiments, including examples of several preferred embodiments of the present invention are set forth below. It is not intended, however, that these Experiments should in any manner restrict the scope of this invention.

The polycarbonate blend compositions prepared are made by dry blending the ingredients thereof and agitating same in a paint shaker for 7 minutes. The dry blended formulations are then melt mixed in a vented 30 millimeter (mm) Werner-Pfleiderer co-rotating, twin screw extruder using a 270°C set temperature and 250 revolutions per minute (rpm). Each extruded composition is passed through a water bath, chopped into granules and collected for molding. Experimental samples are thoroughly dried in a circulated air oven at 105°C for six hours prior to molding. All samples are prepared by injection molding on a 75 ton (6.8 x 10⁴ kg) Arburg molding machine. Molding temperatures for the barrel and mold are set at 270°C and 190°F (89°C), respectively.

The amounts of the polymeric components of the blend compositions are given in Table I in weight parts and weight percent. In the following Tables the following term definitions are intended:

"PC" is Calibre® 300-10 polycarbonate resin, a 10 melt index linear polycarbonate resin prepared from bisphenol A and phosgene available from The Dow Chemical Company.

"Polyolefin" is a 0.92 density low density polyethylene.

"Olefin copolymer" is Dowlex® 2045 olefin copolymer, an ethylene/1-octene copolymer available from The Dow Chemical Company.

"ECO" is an ethylene/carbon monoxide copolymer containing 10 percent carbon monoxide by weight.

"ECO*g*MMA" is a grafted copolymer wherein methyl methacrylate ("MMA") is grafted onto an ethylene/CO copolymer. The portion of the ethylene/CO copolymer derived from carbon monoxide is 10 percent by weight. The portion of the ECO*g*MMA grafted copolymer derived from MMA is 20 percent by weight.

"ECO*g*SAN" is a grafted copolymer wherein styrene and acrylonitrile are grafted onto an ethylene/CO copolymer. The portion of the ethylene/CO copolymer derived from carbon monoxide is 10 percent by weight. The portion of the ECO*g*SAN grafted copolymer derived from styrene and acrylonitrile is 20 percent by weight.

"PET-I" is polyethylene terephthalate having 1.04 inherent viscosity ("IV"); IV is measured in accordance with ASTM Designation D 4603-86.

"PET-II" is polyethylene terephthalate having 0.59 IV.

"AEC" is an aromatic ester carbonate copolymer wherein 75 percent of the copolymer by weight is carbonate units and 25 percent is ester units.

"ABS" is an ABS resin containing approximately 16 percent rubber.

"PMMA" is V-052 Plexiglass™ acrylate polymer, a poly-methyl methacrylate available from Rohm and Haas Corporation.

"P-3607" is Paraloid™ 3607 core-shell polymer, an MBS rubber.

"P-3330" is Paraloid™ 3330 composite interpolymer, a butyl acrylate rubber.

"IR-1076" is Irganox™ 1076 antioxidant.

"ESO" is epoxidized soybean oil used as a tackifier to cause IR-1076 to adhere to and be evenly distributed over the pellets.

The results of tests performed on the blended polycarbonate compositions are shown below in Table II.

Tensile strength at break ("Tensile Break") and percent elongation at break ("% Elong.") are measured in accordance with ASTM Designation D 638-84. The tensile strength values reported are shown first in megaPascals (MPa) and the value in pounds per square inch (psi) is reported in parenthesis.

Environmental stress failure resistance ("ESFR") is evaluated by measuring tensile strength at break ("ESFR Tensile Break") and percent elongation at break ("ESFR % Elong.") in accordance with ASTM Designation D 638-84, with respect to samples which have been tested under ESFR testing conditions. Under these conditions samples are placed under 0.5 percent strain while submerged in a bath of 60 weight percent isooctane and 40 weight percent toluene for 5 minutes and then have been allowed to dry for 24 hours before testing. The ESFR tensile results are shown first in megaPascals (MPa) and the value in pounds per square inch (psi) is reported in parenthesis.

Impact resistance is measured by the Izod test according to ASTM Designation D 256-84 (Method A). The notch is 0.254 mm (10 mils) in radius. A perpendicular symbol (┴) indicates that the sample is cut such that the polymer flow is in the direction perpendicular to the length of the sample and the notch is cut so that the flexural shock caused by the striking nose of the pendulum is propagated parallel to the direction of flow taken by the molten extrudate during formation of the sample. Vertical parallel lines (||) indicate that the sample is cut such that the polymer flow is in the direction parallel to the length of the sample and the notch is cut so that the flexural shock caused by the striking nose of the pendulum is propagated perpendicular to the direction of flow taken by the molten extrudate during formation of the sample. The results of these tests made at the various indicated temperatures are reported first in Joules per meter (J/m) and then given in parenthesis in foot pounds per inch (ft-lb/in).

Weldline Izod strength is also measured according to ASTM Designation D 256-84 (Method A), but with respect to a sample which has been formed with a butt weld in a double gated mold. The sample is unnotched and it is placed in the vise so that the weld is coincident with the top surface of the vise jaws. The results are reported first in J/m and then in parentheses in ft-lb/in.

The Gardner dart drop impact test is performed by dropping a 7.26 kilogram (kg) (16 pound weight) which carries a 12.7 millimeter (mm) (one half inch) diameter dart onto a test sample which is 63.5 mm (2 1/2 inch) square and 3.175 mm (1/8 inch) thick. The weighted dart falls freely on a slotted track and impacts the sample, which is secured in position in the path of descent on an aluminum cast base with a 16.26 mm (0.640 inch) hole to accept the dart after it impacts the sample. The instrument is a Pacific Scientific model #IG-1120. The sample fails if it shows a crack or perforation on the side on which impact did not occur. The results are recorded as either pass (no perforation by the dart at the point of impact) or fail (material exhibits crack or perforation) when the dart has developed a particular amount of energy by falling from the necessary height on the track, as indicated thereon, to develop such energy. The amount of energy recorded in Table II is the greatest energy a sample was able to accept without failing ("Dart Drop Pass"), and then that energy at which it failed ("Dart Drop Fail"), except with respect to Experiments 1, 2, 3, 10, 11 and 12, which passed at 72 Joules (640 in-lb,) the greatest amount of energy the instrument is capable of developing. These energies are shown first in Joules ("J") and then given in parentheses in inch pounds ("in lbs").

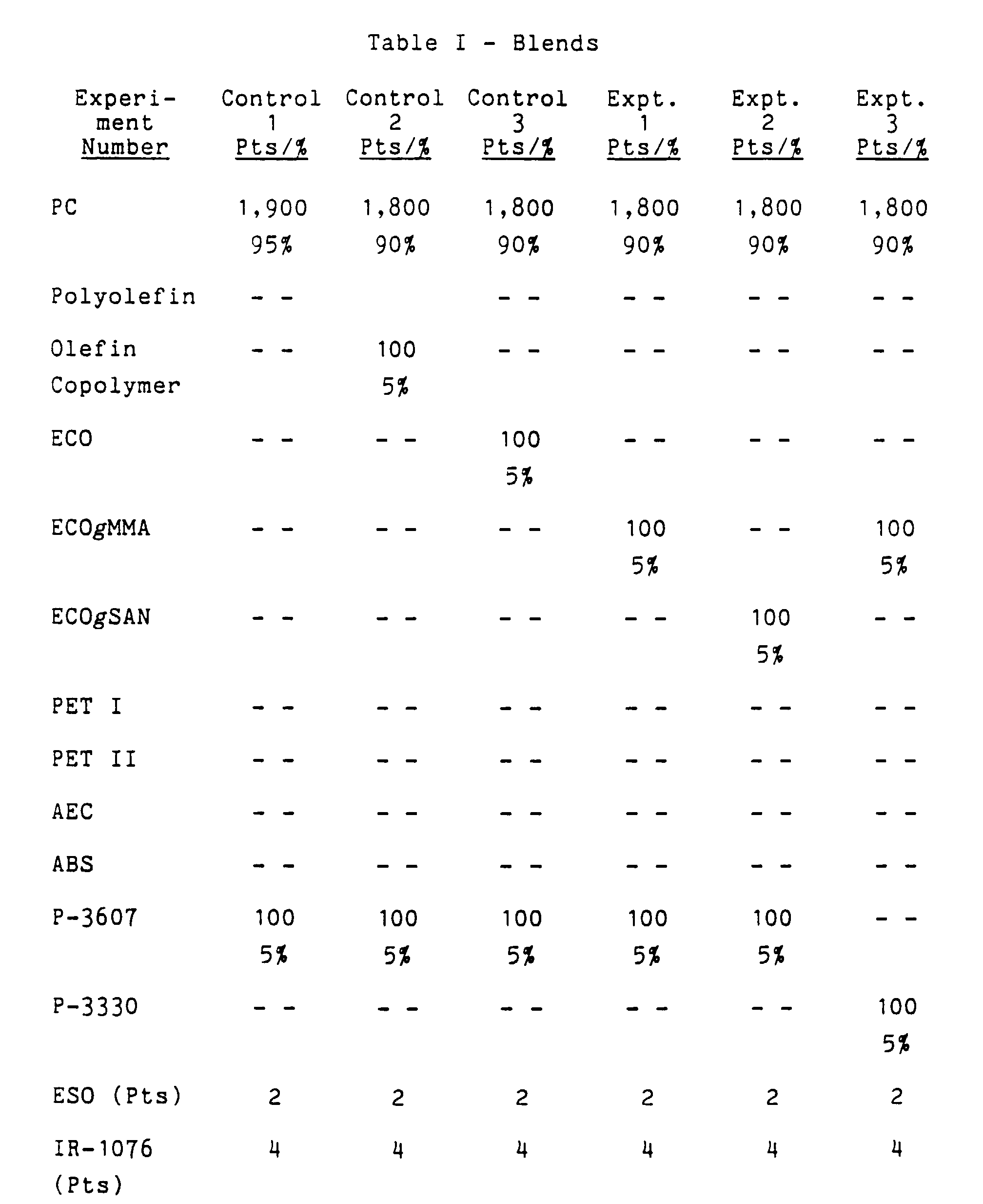

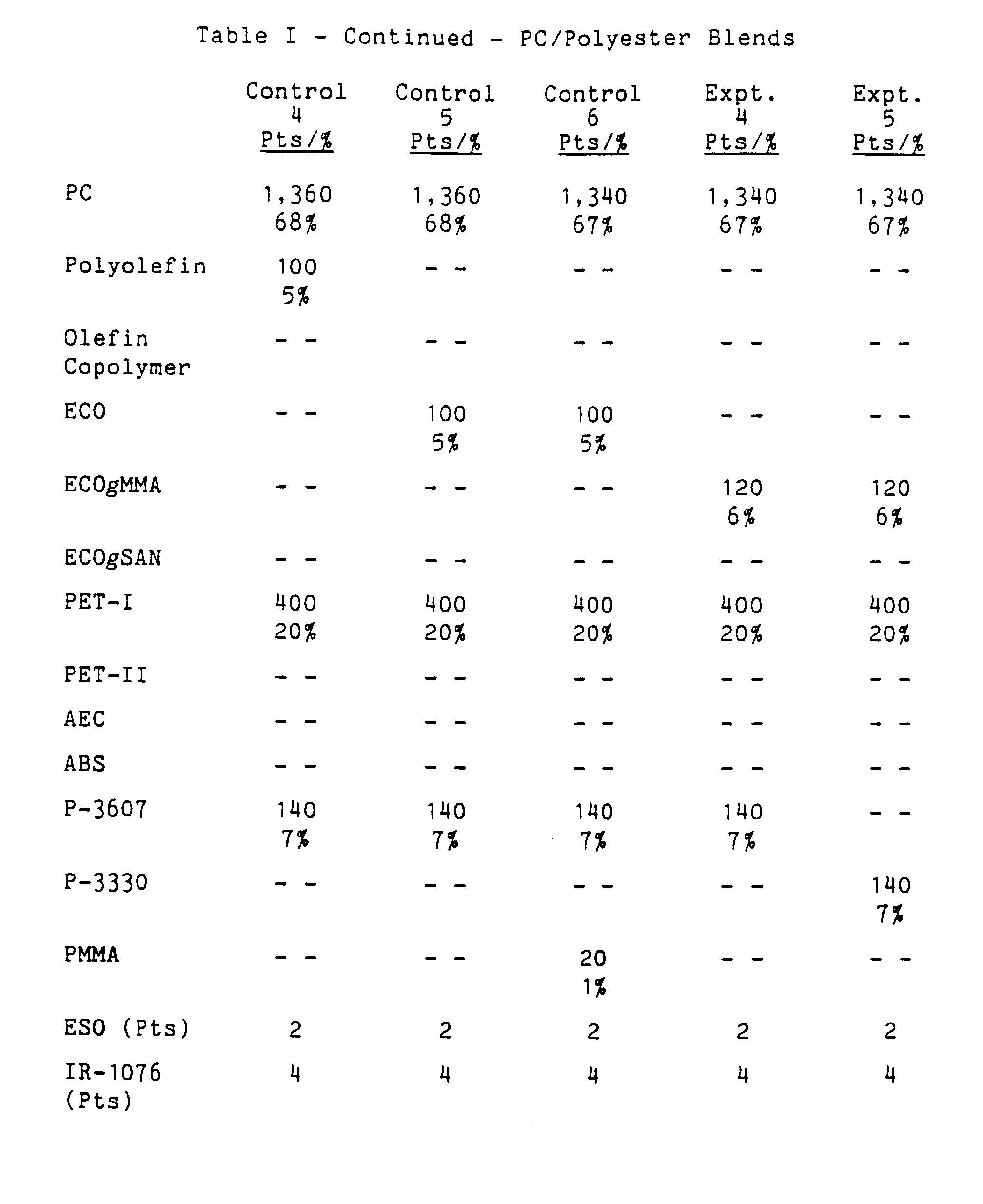

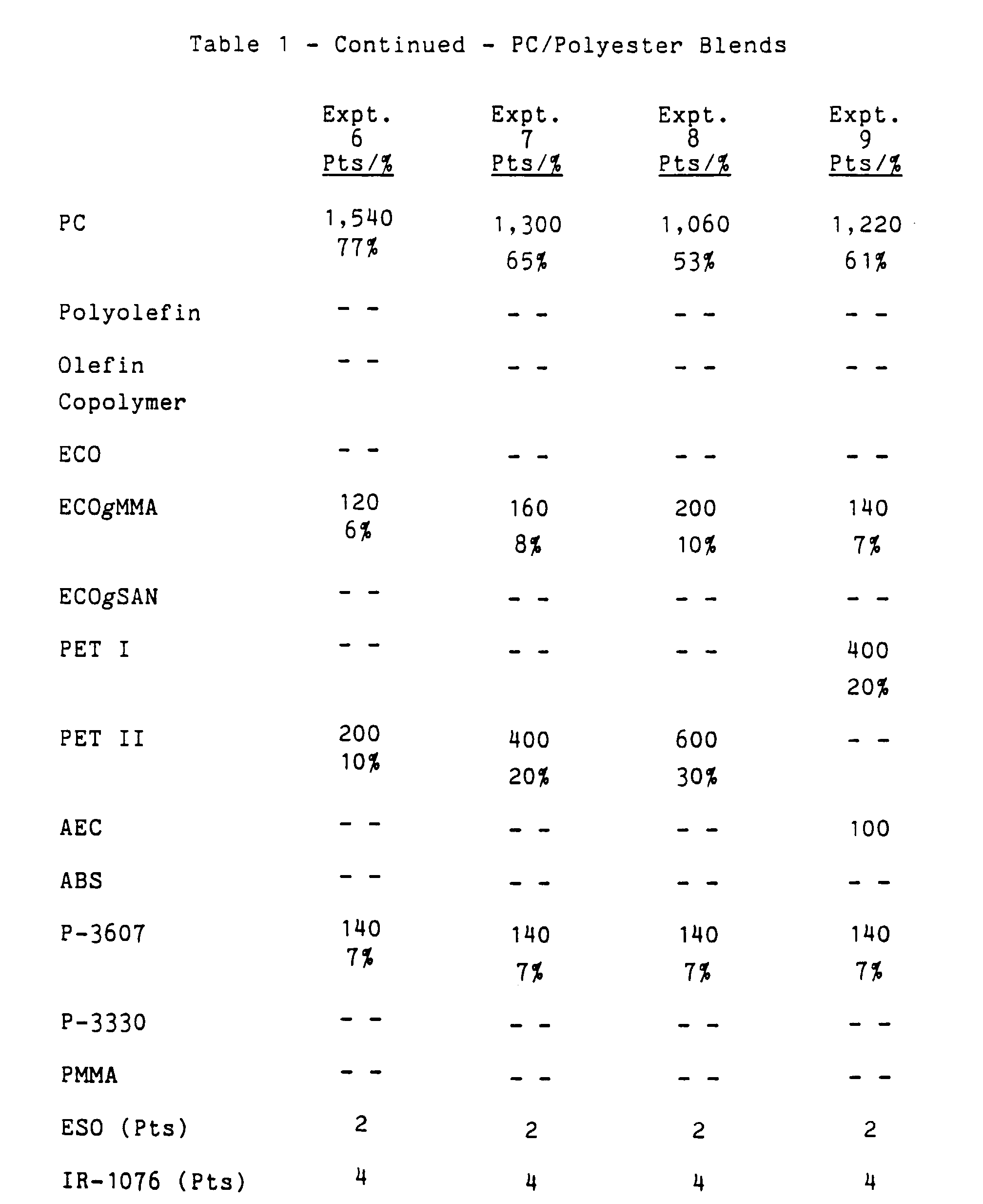

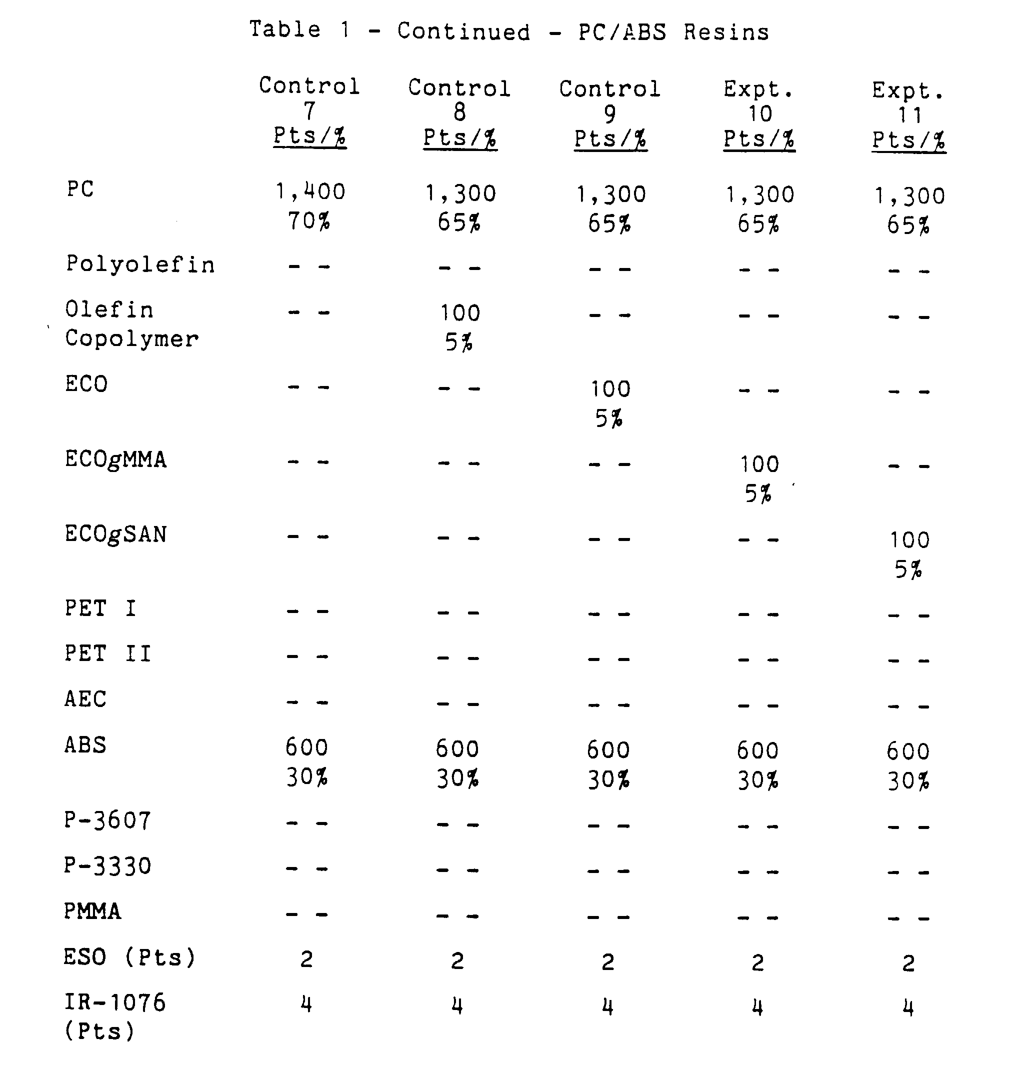

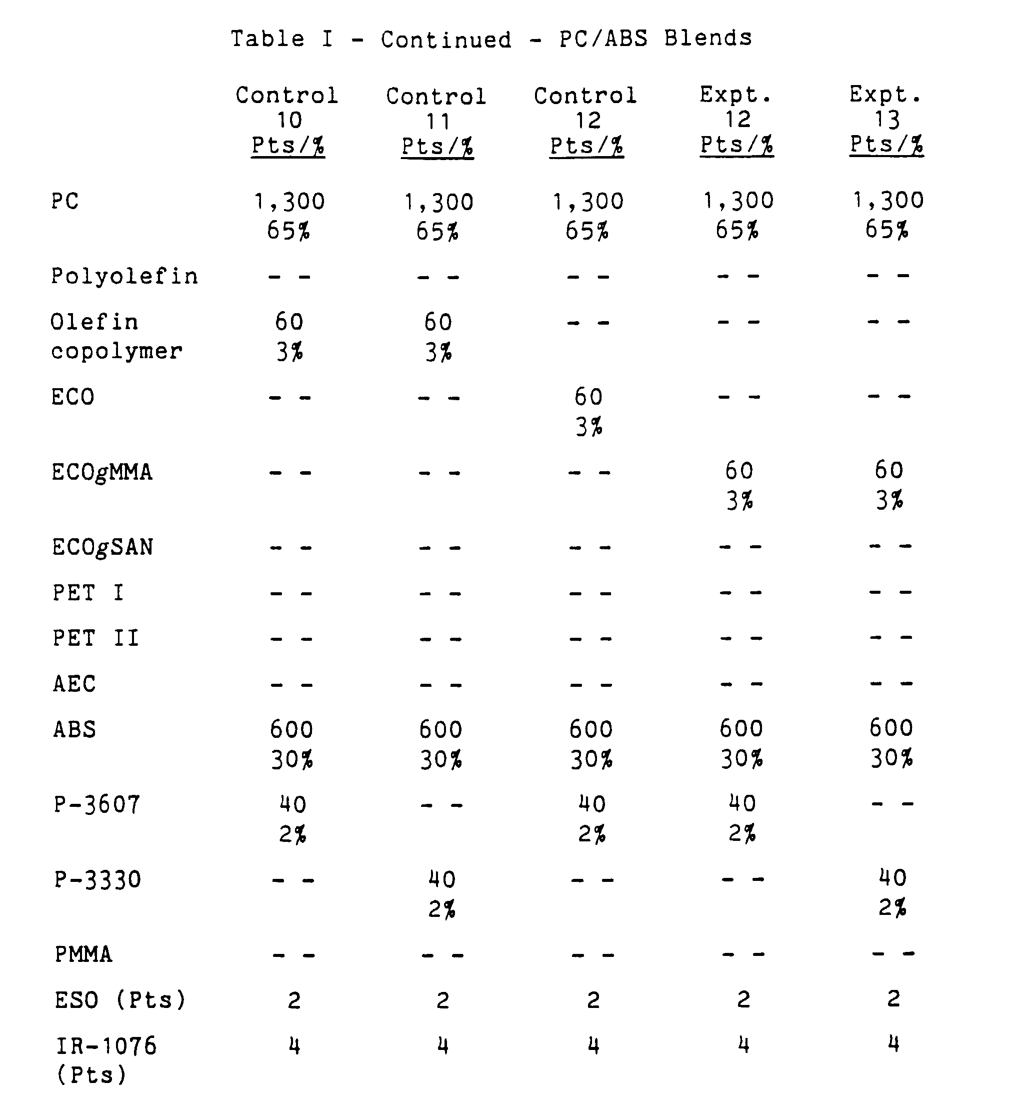

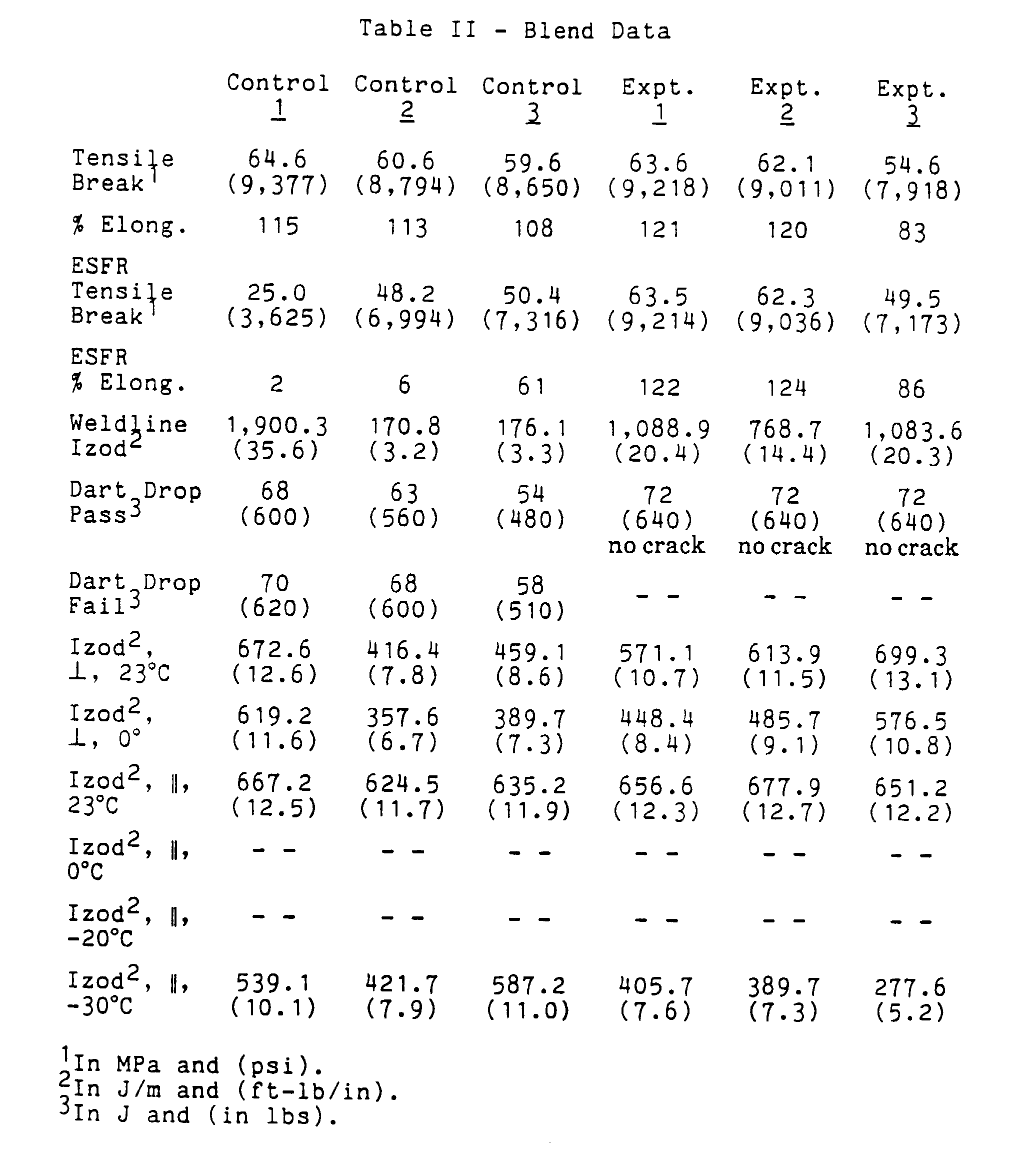

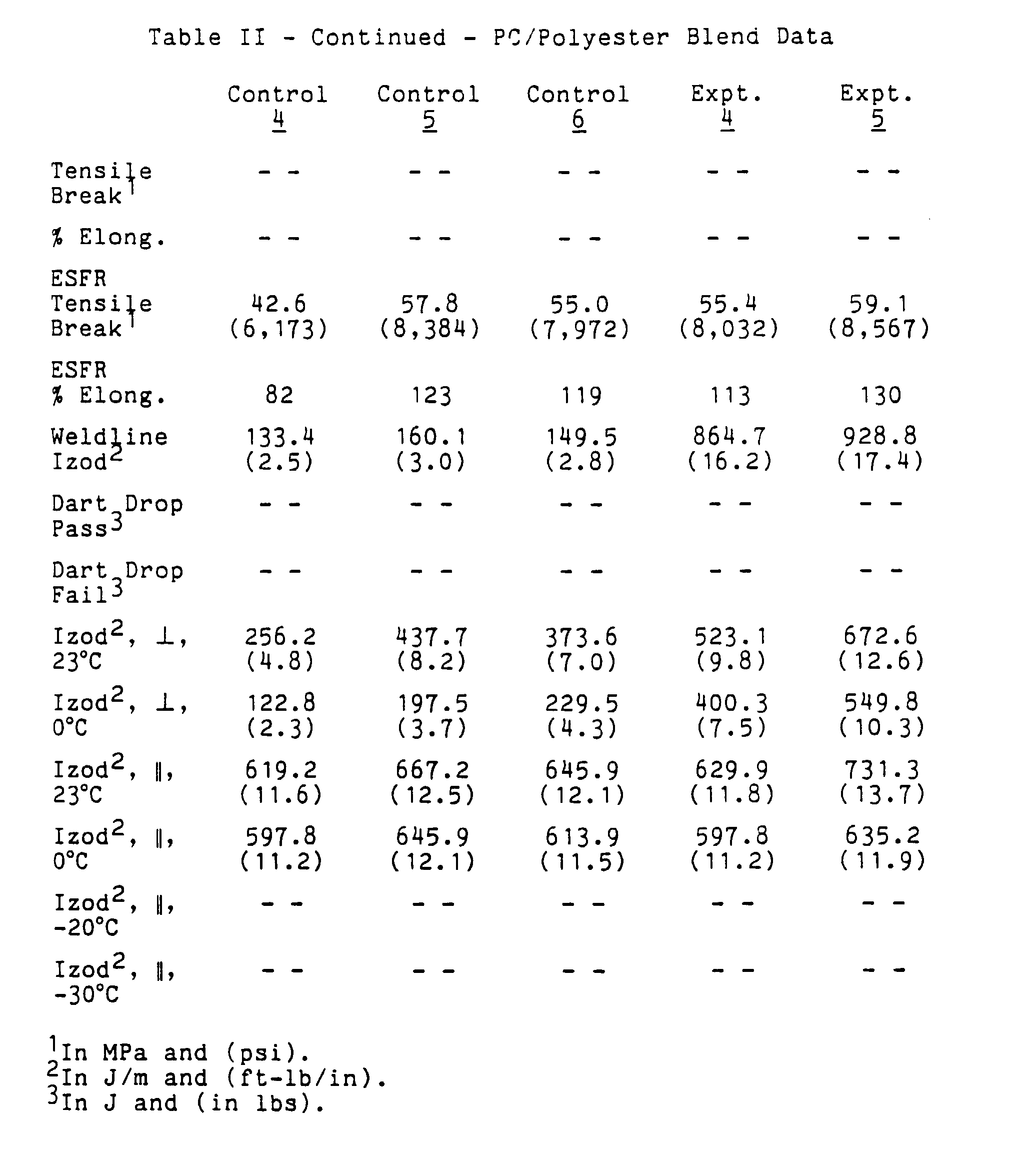

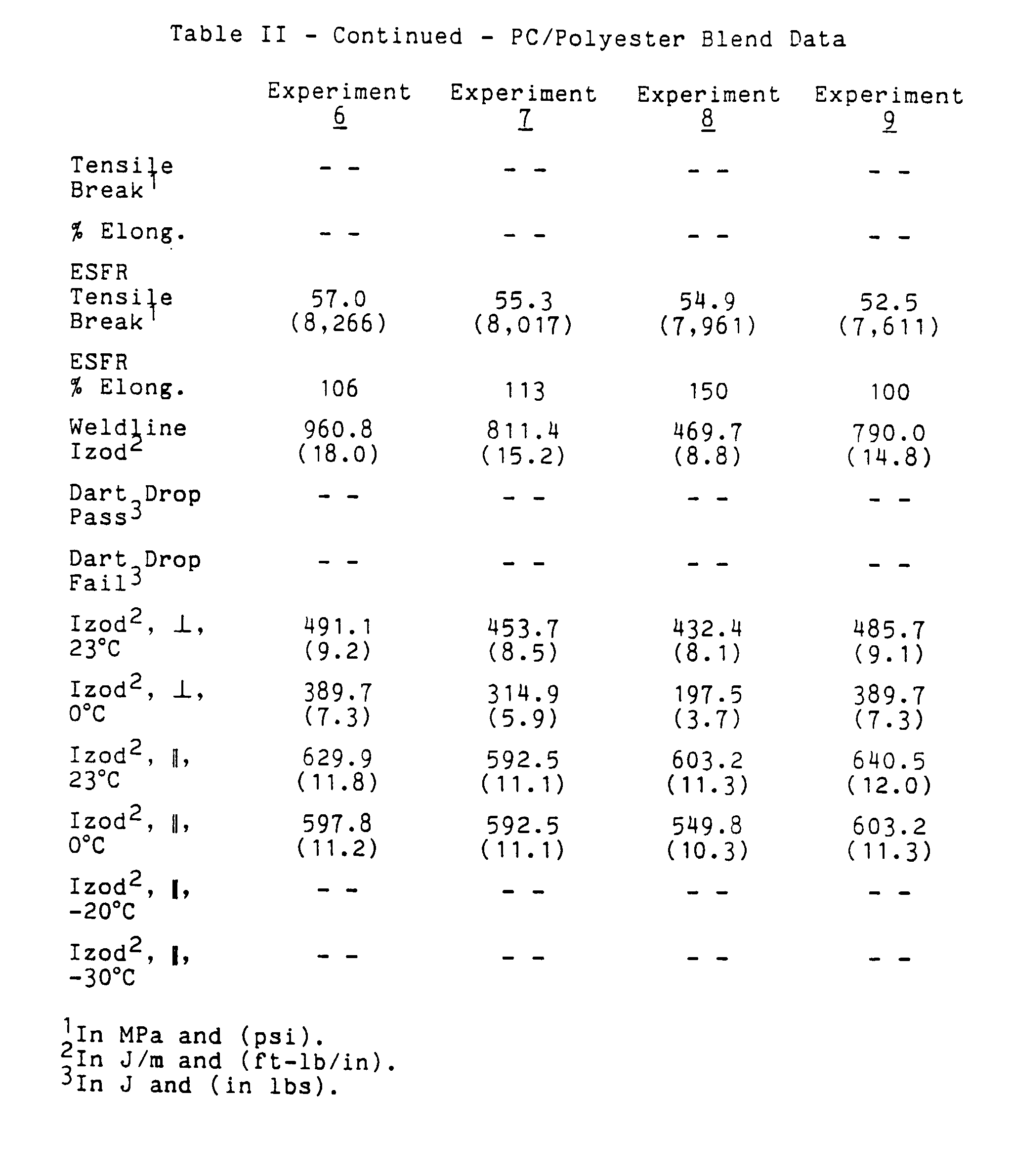

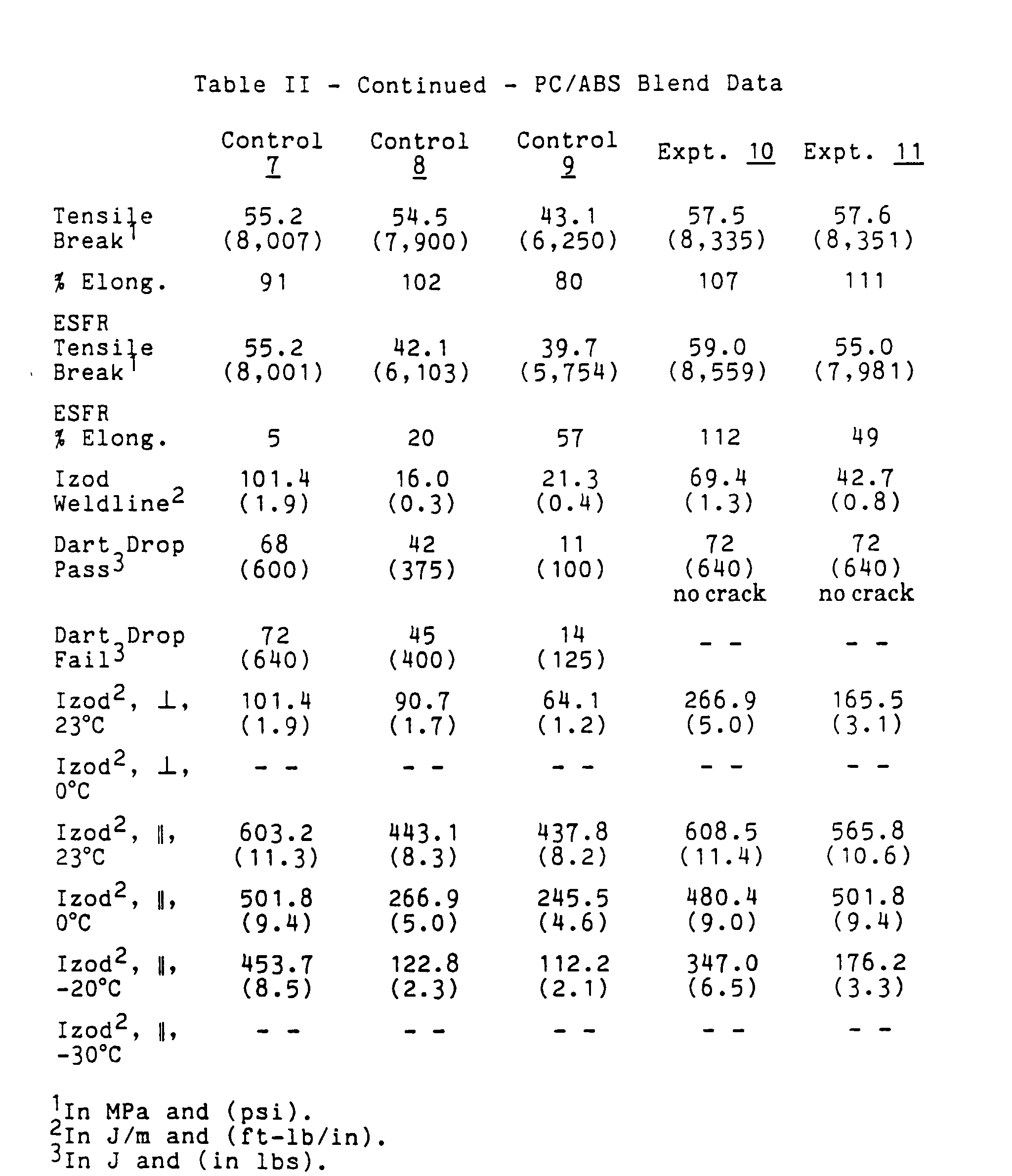

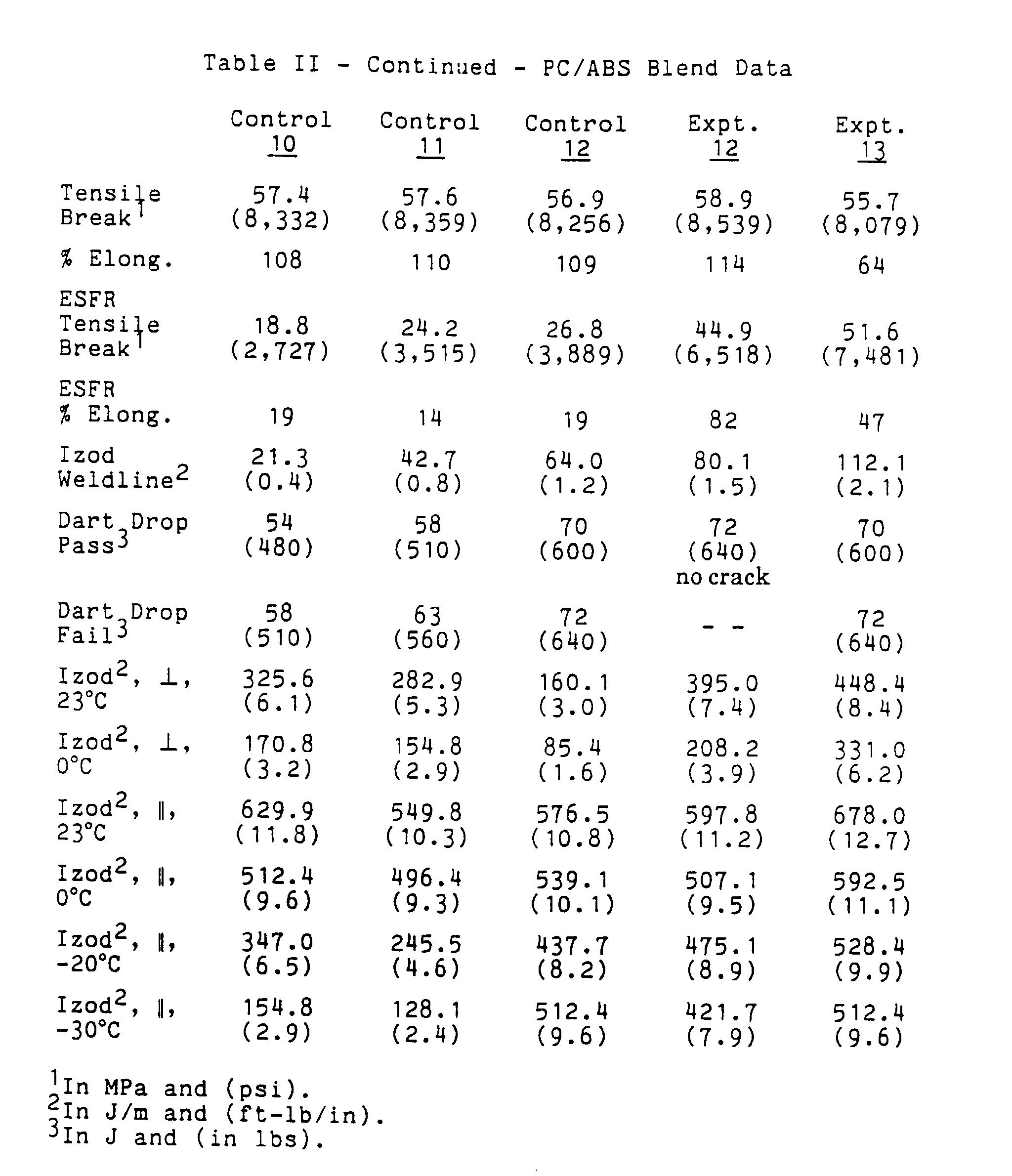

It can be seen from these test results that when polycarbonate is blended with a polyolefin (Control 2), its ESFR is improved over polycarbonate without a polyolefin (Control 1), as shown by percent elongation at break. However, that improvement in ESFR is accomplished at the expense of weldline strength and dart impact resistance. Poor weldline strength and reduced dart impact resistance can be conditions which indicate that delamination of component(s) blended with polycarbonate will occur. The Izod values are also lower for the polyolefin-modified polycarbonate (Control 2) than for polycarbonate not so modified (Control 1).

In comparison, however, when polycarbonate is blended with a grafted olefin/CO copolymer according to the present invention, substantial improvement in ESFR properties over Control 1 is obtained while, at the same time, obtaining improved weldline strength, dart impact strength, low temperature and notched Izod performance over that of polyolefin-modified polycarbonate (Control 2). Although the blended composition containing polycarbonate and ungrafted ECO (Control 3) had an ESFR percent elongation value which was improved over Control 1, the weldline Izod and dart drop values are not as high using ungrafted ECO as they are for Experiments 1-3, wherein a grafted olefin/CO copolymer has been admixed with polycarbonate. A distinct, unexpected improvement in a balance of several different physical properties of a polycarbonate composition is therefore obtained by blending into it a grafted olefin/CO copolymer. Such compositions show reduced tendency toward phase separation which would otherwise be evidenced by the increased tendency toward peeling, splintering, delamination or brittle failure.

It can be seen from the further test results that similarly good results are obtained by adding the grafted olefin/CO copolymer to blends of polycarbonate and other polymers. When a grafted olefin/CO copolymer is admixed with a polycarbonate/aromatic polyester blend, a substantially higher weldline Izod value is obtained than is obtained in such a blend containing LDPE or ECO instead of the grafted olefin/CO copolymer. Compare for example, Experiment 4 with Controls 4 and 5. The blends containing a grafted olefin/CO copolymer also registered ESFR and notched Izod results which were comparable to or better than the corresponding results in blends containing LDPE or ECO.

The improved weldline strength of these blends is a good indication that delamination problems will be reduced. This is supported by the fact that the polycarbonate/aromatic polyester blend of Control 4 showed severe delamination during testing while the blend containing grafted olefin/CO copolymer did not. The superior Izod weldline strength values, coupled with the good ESFR results, show unexpected attainment of superior levels in a balance of several different physical properties of a polycarbonate/aromatic polyester blend as opposed to blends in which increases in the ESFR alone are attained at the expense of the impact and weldline strength thereof.

When polycarbonate blends with a styrenic polymer are modified with a polyolefin (Controls 8, 10 and 11), their ESFR is improved over polycarbonate without a polyolefin (Control 7), as shown by percent elongation at break. However, as in the case of polycarbonate alone, that improvement in ESFR is accomplished at the expense of weldline strength and dart impact resistance.

However, when grafted olefin/CO copolymer is added to a polycarbonate/styrenic polymer blend (Experiment 10), substantial improvement in ESFR properties over Control 7 are obtained. Surprisingly, weldline, dart impact, low temperature and notched Izod performances superior to that of polyolefin-modified polycarbonate/styrenic polymer blends result as well. Although the blended composition containing polycarbonate, ABS and ungrafted ECO (Controls 9 and 12) had an ESFR percent elongation value which was improved over Control 7, the weldline Izod and dart drop values are not as high as they are for Experiments 10 through 13, wherein a grafted olefin/CO copolymer has been admixed with the polycarbonate/ABS blend.

These results demonstrate that the grafted olefin/CO copolymer of this invention functions as a strengthening substance when in admixture in an effective amount in a composition containing polycarbonate and optionally an aromatic polyester or a styrenic thermoplastic resin. The grafted olefin/CO copolymer imparts to objects molded from such composition substantially improved environmental stress failure resistance without substantial loss in impact resistance.

The compositions of this invention, absent any optional aromatic polyester or styrenic thermoplastic resins, desirably have an elongation at break value of at least 10 percent, preferably at least 20 percent, when tested according to ASTM Designation D 638-84 under the above described ESFR testing conditions. Preferably these compositions have a weldline Izod impact strength value of at least 240 J/m (4.5 ft-lb/in), and preferably at least 373 J/m (7.0 ft-lb/in).

The compositions of this invention additionally comprising an amount of the optional aromatic polyester desirably have a tensile strength at break, when tested according to ASTM Designation D 638-84 under the above described ESFR conditions of at least 45 MPa (6,500 psi), more preferably at least 54 MPa (7,800 psi). Preferably these compositions have a weldline Izod impact strength value of at least 187 J/m (3.5 ft-lb/in), and preferably at least 267 J/m (5.0 ft-lb/in).

When additionally containing an amount of the optional styrenic thermoplastic resin, the compositions of this invention desirably have an elongation at break of at least 22 percent, preferably at least 30 percent, when measured according to ASTM Designation D 638-84 under the above described ESFR conditions. Preferably these compositions show no crack when subjected to impact by a dart falling with a force of 45 J (400 in-lb) on a Gardner drop dart instrument and more preferably show no break when subjected to impact by a dart falling with a force of 54 J (480 in-lb).

The results set forth above demonstrate that the grafted olefin/CO copolymer of this invention also reduces the tendency towards delamination which often results when olefin polymer ESFR improving additives are combined into polycarbonate compositions. The grafted olefin/CO copolymer, when in admixture in an effective amount with an aromatic polycarbonate desirably measurably increases one or more of the following properties of the composition as compared to the polycarbonate composition not containing such an agent:
(a) the tensile strength at break of articles molded from said composition when tested according to ASTM Designation D 638-84, particularly when tested under ESFR testing conditions (after having been placed under 0.5 percent strain while submerged in a bath of 60 weight percent isooctane and 40 weight percent toluene for 5 minutes and then dried for 24 hours before testing),
(b) the percent elongation at break of articles molded from said composition when measured according to ASTM Designation D 638-84, particularly when tested under ESFR testing conditions,
(c) the weldline Izod value of articles molded from said composition, and
(d) the highest energy level at which articles molded from said composition show no crack when subjected to impact by a falling dart on a Gardner drop dart instrument.

The performance of the grafted olefin/CO copolymer makes available an improved method of reducing the tendency toward delamination of an article molded from a polycarbonate composition, optionally containing an aromatic polyester or a styrenic thermoplastic resin, wherein said composition is admixed with the grafted olefin/CO copolymer, and said article is then molded from this composition. Also provided is an improved method of molding an article from a polycarbonate composition, optionally containing an aromatic polyester or a styrenic thermoplastic resin, wherein said article is molded frcm such a composition which comprises a grafted olefin/CO copolymer.

## Claims

1. A polycarbonate blend composition comprising, in admixture, (a) an aromatic polycarbonate and (b) a grafted olefin/carbon monoxide copolymer.

2. A composition according to Claim 1 comprising, in admixture, (a) an aromatic polycarbonate, (b) a grafted olefin/carbon monoxide copolymer and (c) a styrenic thermoplastic resin, an aromatic polyester or a mixture thereof.

3. A composition according to Claim 2 comprising an aromatic polyester.

4. A composition according to Claim 2 comprising a styrenic thermoplastic resin.

5. The composition of Claim 1 wherein the olefin/carbon monoxide copolymer is grafted with a vinyl monomer selected from an acrylate, a methacrylate, a vinyl acetate, a vinyl aromatic hydrocarbon, a vinyl cyanide, an unsaturated acid anhydride or a mixture of two or more of these.

6. The composition of Claim 5 wherein the portion of the grafted olefin/carbon monoxide copolymer derived from the vinyl grafting monomer(s) is from 1 to 50 percent by weight of the end product grafted copolymer.

7. The composition of Claim 1 wherein said olefin/carbon monoxide copolymer is a copolymer of ethylene and carbon monoxide.

8. The composition of Claim 1 wherein the portion of the olefin/carbon monoxide copolymer derived from carbon monoxide is from 0.1 to 40 percent by weight.

9. The composition of Claim 1 wherein the styrenic thermoplastic resin is selected from ABS, AES, or ASA copolymers or a mixture of two or more of these.

10. The composition of Claim 1 further comprising a toughening agent.

11. A composition according to Claim 1 comprising 9 to 94 percent aromatic polycarbonate, 1 to 25%grafted olefin/carbon monoxide copolymer, 5 to 90 percent aromatic polyester or styrenic thermoplastic resin, and up to 20 percent toughening agent, by weight of the total composition.

12. An improved method of molding an article from a polycarbonate composition, optionally containing an aromatic polyester or a styrenic thermoplastic resin, wherein said article is molded from such a composition which comprises a grafted olefin/carbon monoxide copolymer.

13. A molded article obtainable from a polycarbonate blend composition according to any one of Claims 1-11.

14. A graft copolymer comprising a backbone polymer of an olefin/carbon monoxide copolymer comprising from 0.1 to 40 percent by weight carbon monoxide which backbone polymer is grafted with a polymer of one or more vinyl or vinylidene monomers and comprising from 5 to 30 percent by weight grafted polymer based on total weight of the grafted and backbone polymer, with the proviso that said vinyl(idene) monomer is not maleic anhydride.

15. A graft copolymer according to Claim 14 wherein the grafted polymer comprises a vinyl aromatic monomer, a vinyl cyanide monomer, a C₁-C₈ alkyl methacrylate or a mixture of two or more of these.

16. A graft copolymer according to Claim 15 wherein the grafted polymer comprises a vinyl aromatic monomer, a vinyl cyanide monomer, or a mixture of these.

17. A graft polymer according to Claim 15 wherein the polymer is an "ECOgMMA" grafted copolymer wherein methyl methacrylate ("MMA") is grafted onto an ethylene/CO copolymer, the portion of the ethylene/CO copolymer derived from carbon monoxide being 10 percent by weight and the portion of the ECOgMMA grafted copolymer derived from MMA being 20 percent by weight.

18. A graft polymer according to claim 16 wherein the polymer is an "ECOgSAM" grafted copolymer wherein styrene and acrylonitrile are grafted onto an ethylene/CO copolymer, the portion of the ethylene/CO copolymer derived from carbon monoxide being 10 percent by weight and the porlion of the ECOg-SAN grafted copolymer derived from styrene and acrylonitrile being 20 percent by weight.

## Patentansprüche

1. Polycarbonatmischungs-Zusammensetzung, umfassend in Zusammenmischung: (a) ein aromatisches Polycarbonat und (b) ein gepfropftes Olefin/Kohlenmonoxidcopolymeres.

2. Zusammensetzung nach Anspruch 1, umfassend in Zusammenmischung: (a) ein aromatische Polycarbonat, (b) ein gepfropftes Olefin/Kohlenmonoxidcopolymeres und (c) ein styrolartiges thermoplastisches Harz, einen aromatischen Polyester oder eine Mischung hiervon.

3. Zusammensetzung nach Anspruch 2, umfassend einen aromatischen Polyester.

4. Zusammensetzung nach Anspruch 2, umfassend ein styrolartiges thermoplastisches Harz.

5. Zusammensetzung nach Anspruch 1, worin das Olefin/Kohlenmonoxidcopolymere mit einem Vinylmonomeren, ausgewählt aus einem Acrylat, einem Methacrylat, einem Vinylacetat, einem vinylaromatischen Kohlenwasserstoff, einem Vinylcyanid, einem ungesättigten Säureanhydrid oder einer Mischung von zwei oder mehreren hiervon, gepfropft ist.

6. Zusammensetzung nach Anspruch 5, worin der Anteil des gepfropften Olefin/Kohlenmonoxidcopolymeren, herrührend von dem/ den Vinylpfropfmonomeren, von 1 bis 50 Gew.-% des gepfropften Endprodukt-Copolymeren beträgt.

7. Zusammensetzung nach Anspruch 1, worin dieses Olefin/Kohlenmonoxidcopolymere ein Copolymeres von Ethylen und Kohlenmonoxid ist.

8. Zusammensetzung nach Anspruch 1, worin der Anteil des Olefin/Kohlenmonoxidcopolymeren, herrührend von Kohlenmonoxid, von 0,1 bis 40 Gew.-% beträgt.

9. Zusammensetzung nach Anspruch 1, worin das styrolartige thermoplastische Harz ausgewählt ist aus ABS-, AES- oder ASA-Copolymeren oder einer Mischung von zwei oder mehreren hiervon.

10. Zusammensetzung nach Anspruch 1, weiter umfassend einen Schlagfestmacher.

11. Zusammensetzung nach Anspruch 1, umfassend 9 bis 94 % aromatisches Polycarbonat, 1 bis 25 % gepfropftes Olefin/Kohlenmonoxidcopolymeres, 5 bis 90 % aromatischen Polyester oder styrolartiges thermoplastisches Harz und bis zu 20 % Schlagfestmacher, bezogen auf Gewicht der Gesamtzusammensetzung.

12. Verbessertes Verfahren zum Formen eines Artikels aus einer Polycarbonatzusammensetzung, wahlweise enthaltend einen aromatischen Polyester oder ein styrolartiges thermoplastisches Harz, wobei dieser Artikel aus einer solchen Zusammensetzung geformt wird, welche ein gepfropftes Olefin/Kohlenmonoxidcopolymeres umfaßt.

13. Geformter Artikel, erhältlich aus einer Polycarbonatmischungs-Zusammensetzung nach einem der Ansprüche 1 - 11.

14. Pfropfcopolymeres, umfassend ein Rückgratpolymeres eines Olefin/Kohlenmonoxidcopolymeren, umfassend von 0,1 bis 40 Gew.-% Kohlenmonoxid, wobei dieses Rückgratpolymere mit einem Polymeren von einem oder mehreren Vinyl- oder Vinylidenmonomeren gepfropft ist und von 5 bis 30 Gew.-% gepfropftes Polymere, bezogen auf Gesamtgewicht des gepfropften Polymeren und Rückgratpolymeren enthält, mit der Maßgabe, daß dieses Vinyl(iden)monomere nicht Maleinanhydrid ist.

15. Pfropfcopolymeres nach Anspruch 14, worin das gepfropfte Polymere ein vinylaromatisches Monomeres, ein Vinylcyanidmonomeres, ein C₁-C₈-Alkylmethacrylat oder eine Mischung von zwei oder mehreren hiervon umfaßt.

16. Pfropfcopolymeres nach Anspruch 15, worin das gepfropfte Polymere ein vinylaromatisches Monomeres, ein Vinylcyanidmonomeres oder eine Mischung von diesen umfaßt.

17. Pfropfpolymeres nach Anspruch 15, worin das Polymere ein "ECOgMMA" gepfropftes Copolymeres ist, worin Methylmethacrylat ("MMA") auf ein Ethylen/CO-copolymers gepfropft ist, der Anteil des Ethylen/CO-copolymeren, herrührend von Kohlenmonoxid, 10 Gew.-% beträgt und der Anteil des ECOgMMA gepfropften Copolymeren, herrührend von MMA, 20 Gew.-% beträgt.

18. Pfropfpolymeres nach Anspruch 16, worin das Polymere ein "ECOgSAN" gepfropftes Copolymeres ist, worin Styrol und Acrylnitril auf ein Ethylen/CO-copolymers gepfropft sind, der Anteil des Ethylen/CO-copolymeren, herrührend von Kohlenmonoxid, 10 Gew.-% beträgt und der Anteil des ECOgSAN gepfropften Copolymeren, herrührend von Styrol und Acrylnitril, 20 Gew.-% beträgt.

## Revendications

1. Composition mélangée à base de polycarbonate contenant, sous forme de mélange, (a) un polycarbonate aromatique et (b) un copolymère oléfine/monoxyde de carbone greffé.

2. Composition conforme à la revendication 1 contenant, sous forme de mélange, (a) un polycarbonate aromatique, (b) un copolymère oléfine/monoxyde de carbone greffé et (c) une résine thermoplastique styrénique, un polyester aromatique ou un mélange de ceux-ci.

3. Composition conforme à la revendication 2 contenant un polyester aromatique.

4. Composition conforme à la revendication 2 contenant une résine thermoplastique styrénique.

5. Composition conforme à la revendication 1 dans laquelle un monomère vinylique choisi parmi un acrylate, un méthacrylate, un acétate de vinyle, un hydrocarbure vinyl-aromatique, un cyanure de vinyle, un anhydride d'acide insaturé, ou un mélange contenant deux ou plus de ceux-ci est greffé sur le copolymère oléfine/monoxyde de carbone.

6. Composition conforme à la revendication 5 dans laquelle la partie du copolymère oléfine/monoxyde de carbone greffé, dérivée du ou des monomère(s) vinylique(s) de greffage représente entre 1 et 50 % en poids du copolymère greffé.

7. Composition conforme à la revendication 1 dans laquelle ledit copolymère oléfine/monoxyde de carbone est un copolymère d'éthylène et de monoxyde de carbone.

8. Composition conforme à la revendication 1 dans laquelle la partie du copolymère oléfine/monoxyde de carbone greffé, dérivée de monoxyde de carbone représente entre 0,1 et 40 % en poids.

9. Composition conforme à la revendication 1 dans laquelle la résine thermoplastique styrénique est choisie parmi les copolymères ABS, AES ou ASA ou un mélange de deux ou de plus de ceux-ci.

10. Composition conforme à la revendication 1 contenant en outre un agent augmentant la ténacité.

11. Composition conforme à la revendication 1 contenant de 9 à 94 % de polycarbonate aromatique, de 1 à 25 % de copolymère oléfine/monoxyde de carbone greffé, de 5 à 90 % de polyester aromatique ou de résine thermoplastique styrénique, et jusqu'à 20 % d'un agent augmentant la ténacité, rapporté au poids total de la composition.

12. Procédé amélioré de moulage d'un article à partir d'une composition de polycarbonate, contenant éventuellement un polyester aromatique ou une résine thermoplastique styrénique, dans lequel ledit article est moulé à partir d'une telle composition contenant un copolymère de greffage oléfine/monoxyde de carbone.

13. Article moulé que l'on peut obtenir à partir d'une composition mélangée de polycarbonate conforme à une des revendications 1 - 11.

14. Copolymère de greffage contenant un tronc polymère qui est un copolymère oléfine/monoxyde de carbone contenant de 0,1 à 40 % en poids de monoxyde de carbone sur lequel tronc est greffé un polymère d'un ou de plusieurs monomères à groupe vinyle ou vinylidène, et contenant de 5 à 30 % en poids de greffons par rapport au poids total du tronc et des greffons, à condition que ledit monomère à groupe vinyl(idène) ne soit pas l'anhydride maléique.

15. Copolymère de greffage conforme à la revendication 14 dans lequel les greffons contiennent un monomère vinylaromatique, un monomère de type cyanure de vinyle, un méthacrylate d'alkyle en C₁₋₈ ou un mélange de deux ou plus de ceux-ci.

16. Copolymère de greffage conforme à la revendication 5 dans lequel les greffons contiennent un monomère vinylaromatique, un monomère de type cyanure de vinyle ou un mélange de ceux-ci.

17. Polymère de greffage conforme à la revendication 15 dans lequel le polymère est un copolymère de greffage ECOgMMA dans lequel on a greffé du méthacrylate de méthyle ("MMA") sur un copolymère éthylène/CO, la partie du copolymère éthylène/CO dérivée de monoxyde de carbone représentant 10 % en poids et la partie du copolymère de greffage ECOgMMA dérivée de MMA représentant 20 % en poids.

18. Polymère de greffage conforme à la revendication 16 dans lequel le polymère est un copolymère de greffage ECOgSAN dans lequel on a greffé du styrène et de l'acrylonitrile sur un copolymère éthylène/CO, la partie du copolymère éthylène/CO dérivée de monoxyde de carbone représentant 10 % en poids et la partie du copolymère de greffage ECOgSAN dérivée de styrène et d'acrylonitrile représentant 20 % en poids.
